(19) Europäisches Patentamt
European Patent Office
Office européen des brevets

(11) **EP 2 796 489 B1**

(12) **EUROPEAN PATENT SPECIFICATION**

(45) Date of publication and mention
of the grant of the patent:
**05.08.2020 Bulletin 2020/32**

(21) Application number: **12860288.5**

(22) Date of filing: **14.12.2012**

(51) Int Cl.:
*C08J 9/16* (2006.01)          *C08K 3/04* (2006.01)
*C08L 23/10* (2006.01)

(86) International application number:
**PCT/JP2012/082481**

(87) International publication number:
**WO 2013/094529 (27.06.2013 Gazette 2013/26)**

(54) **POLYPROPYLENE-BASED RESIN FOAMED PARTICLES HAVING EXCELLENT FLAME RETARDANCY AND CONDUCTIVITY AND POLYPROPYLENE-BASED RESIN IN-MOLD FOAMED MOLDED PRODUCT**

GESCHÄUMTE PARTIKEL AUS POLYPROPYLENBASIERTEM HARZ MIT HERVORRAGENDER FLAMMHEMMUNG UND LEITFÄHIGKEIT SOWIE IN EINEM SPRITZGIESSWERKZEUG GEFORMTES FORMPRODUKT AUF DER BASIS VON POLYPROPYLENBASIERTEM HARZ

PARTICULES MOUSSÉES DE RÉSINE À BASE DE POLYPROPYLÈNE AYANT UN EXCELLENT RETARD DE FLAMME ET UNE EXCELLENTE CONDUCTIVITÉ ET PRODUITS MOULÉS MOUSSÉS DANS LE MOULE DE RÉSINE À BASE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 JP 2011279551**

(43) Date of publication of application:
**29.10.2014 Bulletin 2014/44**

(73) Proprietor: **Kaneka Corporation**
**Osaka-shi, Osaka 530-8288 (JP)**

(72) Inventors:
• **MIURA, Shintaro**
**Settsu-shi**
**Osaka 566-0072 (JP)**

• **YOSHIDA, Toru**
**Settsu-shi**
**Osaka 566-0072 (JP)**

(74) Representative: **TBK**
**Bavariaring 4-6**
**80336 München (DE)**

(56) References cited:
JP-A- H09 202 837    JP-A- H10 251 436
JP-A- 2000 169 619    JP-A- 2004 175 819
JP-A- 2004 263 033    JP-A- 2010 209 145
JP-A- 2010 270 243

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to, for example, expanded polypropylene resin particles and a polypropylene resin-based in-mold expansion-molded product each of which is used for a shock-absorbing packaging material, a radio wave absorption material.

Background Art

A polypropylene resin-based in-mold expansion-molded product obtainable from expanded polypropylene resin particles has features, which are advantages of an in-mold expansion-molded product, such as an arbitrary property of a shape, a shock-absorbing property, a lightweight property, a heat insulating property.

Furthermore, the polypropylene resin-based in-mold expansion-molded product obtainable from expanded polypropylene resin particles is more excellent in chemical resistance, heat resistance, and rate of strain recovery after compression than a polystyrene resin-based in-mold expansion-molded product obtainable from expanded polystyrene resin particles. Moreover, the polypropylene resin-based in-mold expansion-molded product obtainable from expanded polypropylene resin particles is more excellent in dimensional accuracy, heat resistance, and compressive strength than the polyethylene resin-based in-mold expansion-molded product obtainable from expanded polyethylene resin particles.

These features allow the polypropylene resin-based in-mold expansion-molded product obtainable from expanded polypropylene resin particles to be variously used for a shock-absorbing material, a returnable box, a heat insulating material, an automotive member.

Further, the polypropylene resin-based in-mold expansion-molded product is also used for (i) a shock-absorbing material of an electronic device or a precision device, (ii) a parts tray of a robotized line, or (iii) a radio wave absorber which is used to, for example, take measures against radiation noise of an anechoic chamber or an electronic device, or take preventive measures against radio reflection. An electrically conductive polypropylene resin-based in-mold expansion-molded product which contains electrically conductive carbon black in an amount of not less than 10 wt% is used for such a case (for example, Patent Literatures 1 through 6).

However, the electrically conductive carbon black content of not less than 10 wt% lowers flame retardancy of the electrically conductive polypropylene resin-based in-mold expansion-molded product. Therefore, it is necessary to add a flame retardant in a large amount in a case where the electrically conductive polypropylene resin-based in-mold expansion-molded product is applied to a member which is required to have flame retardancy.

A deterioration in flame retardancy of the electrically conductive polypropylene resin-based in-mold expansion-molded product is less notable in a case where an organic foaming agent such as butane is used as a forming agent for use in production of expanded polypropylene resin particles. In contrast, a deterioration in flame retardancy of the electrically conductive polypropylene resin-based in-mold expansion-molded product is notable in a case where an inorganic foaming agent such as carbon dioxide is used as the forming agent for use in production of expanded polypropylene resin particles.

Note, however, that none of Patent Literatures 1 through 6 mentioned above clearly describe a problem of a deterioration in flame retardancy of the electrically conductive polypropylene resin-based in-mold expansion-molded product, particularly a problem such that a deterioration in flame retardancy of the electrically conductive polypropylene resin-based in-mold expansion-molded product is more notable in a case where an inorganic foaming agent is used.

Meanwhile, not only electrically conductive carbon black mentioned above but also coloring carbon black is known as carbon black. Coloring carbon black is generally used to color a polypropylene resin-based in-mold expansion-molded product. Further, it has been conventionally known that a polypropylene resin-based in-mold expansion-molded product for which coloring carbon black is used deteriorates in flame retardancy (for example, Patent Literatures 7 through 9).

Flame retardancy of a polypropylene resin-based in-mold expansion-molded product which has been colored black by use of coloring carbon black is improved by adding a nitrogen flame retardant (hindered amine flame retardant) according to Patent Literature 7, by using an aggregation of carbon black aggregates having an average area of a specific value according to Patent Literature 8, and by adding a specific polyhydric alcohol according to Patent Literature 9.

Note that in Patent Literatures 7 through 9, there is a statement that an added amount of coloring carbon black is not less than 10 wt%. However, actually, not more than 10 wt% is large enough to satisfy blackness of an in-mold expansion-molded product. According to Examples of Patent Literatures 7 through 9, an improvement in flame retardancy can be observed by adding coloring carbon black in a low amount of less than 5 wt%, and it is not stated that flame retardancy is also improved by adding coloring carbon black in an amount of not less than 10 wt% in which amount electrically conductive carbon black is used.

Patent Literature 8 states that a hydrophilic polymer or a polyhydric alcohol such as polyethylene glycol, glycerin, or the like can be used to improve an expansion ratio. However, Patent Literature 8 does not suggest that such a compound influences flame retardancy. In addition, Patent Literature 8 does not describe a problem such that a deterioration in flame retardancy is notable in a case where carbon black is added in an amount of not less than 10 wt% or in a case where an inorganic foaming agent is used.

Patent Literature 9 states that addition of a specific polyhydric alcohol improves flame retardancy in a case where coloring carbon black is added in an amount of not more than 10 wt%. However, as described in Comparative Examples of Patent Literature 9, it is stated in Patent Literature 9 that addition of a specific polyhydric alcohol does not improve flame retardancy in a case where coloring carbon black is added in an amount of more than 10 wt% (e.g., 15 wt%).

Generally, there is a difference in amount of absorption of dibutyl phthalate (DBP) between electrically conductive carbon black and coloring carbon black each of which is used by being added to a resin. Carbon black having a DBP absorption amount of approximately not less than 200 $cm^3/100$ g is excellent in electrically conductive performance. Therefore, such carbon black is used as electrically conductive carbon black. In contrast, carbon black having a DBP absorption amount of less than 200 $cm^3/100$ g is excellent in blackness. Therefore, such carbon black is used as coloring carbon black.

It is not necessarily impossible to use coloring carbon black to provide electrical conductivity. However, in order to realize excellent electrical conductivity, e.g., a volume resistivity value of not more than 5000 $\Omega$·cm, coloring carbon black needs to be added in a larger amount than electrically conductive carbon black. Therefore, use of coloring carbon black is impractical, e.g., makes it difficult to expansion-mold expanded resin particles.

As described earlier, conventional techniques, which are insufficient to obtain a polypropylene resin-based in-mold expansion-molded product which is excellent in both electrical conductivity and flame retardancy, need to be further improved.

Further, JP-H10-251436 A discloses expanded inorganic-containing polypropylene resin particles. An inorganic flame retardant, a conductive carbon, etc., are used as the inorganic substance.

JP-2004-175819 A discloses electroconductive polypropylene resin preexpanded particles comprising conductive carbon.

EP 1055700 A1 discloses polypropylene resin preexpanded particles containing a conductive carbon.

Citation List

Patent Literatures

Patent Literature 1
Japanese Patent Application Publication, Tokukaihei, No. 7-300536 A (1995)
Patent Literature 2
Japanese Patent Application Publication, Tokukaihei, No. 9-202837 A (1997)
Patent Literature 3
Japanese Patent Application Publication, Tokukai, No. 2000-169619 A
Patent Literature 4
Japanese Patent Application Publication, Tokukai, No. 2004-175819 A
Patent Literature 5
Japanese Patent Application Publication, Tokukai, No. 2003-229691 A
Patent Literature 6
Japanese Patent Application Publication, Tokukai, No. 2004-319603 A
Patent Literature 7
Japanese Patent Application Publication, Tokukai, No. 2004-263033 A
Patent Literature 8
Japanese Patent Application Publication, Tokukai, No. 2010-209145 A
Patent Literature 9
Japanese Patent Application Publication, Tokukai, No. 2010-270243 A

Summary of Invention

Technical Problem

A main object of the present invention is to provide expanded polypropylene resin particles from which a polypropylene resin-based in-mold expansion-molded product is obtainable, the polypropylene resin-based in-mold expansion-molded product being excellent in electrical conductivity and particularly having improved in flame retardancy with no use of a flame retardant. In particular, an object of the present invention is to provide expanded polypropylene resin particles which make it possible to realize excellent flame retardancy also in the case of using a conventional inorganic foaming agent which is low in flame retardancy.

Solution to Problem

As a result of diligent study to solve the problems, inventors of the present invention found that flame retardancy is surprisingly improved with no use of a flame retardant by applying a technique for increasing an average cell diameter of an in-mold expansion-molded product to a polypropylene resin-based in-mold expansion-molded product which realizes excellent electrical conductivity by use of electrically conductive carbon black showing a specific amount of dibutyl phthalate absorption (hereinafter may be referred to as a "DBP absorption amount"). Then, the inventors finally accomplished the present invention.

That is, the following are requirements of the present invention.

[1] Expanded polypropylene resin particles obtainable by expanding polypropylene resin particles containing a polypropylene resin composition which contains electrically conductive carbon black in an amount in a range of not less than 11 parts by weight and not more than 25 parts by weight with respect to 100 parts by weight of polypropylene resin, the electrically conductive carbon black having a dibutyl phthalate absorption amount in a range of not less than 300 $cm^3/100$ g and not more than 600 $cm^3/100$ g, the expanded polypropylene resin particles having an average cell diameter in a range of more than 0.16 mm and not more than 0.35 mm.

[2] The expanded polypropylene resin particles mentioned in [1], wherein the expansion is carried out by use of an inorganic foaming agent.

[3] The expanded polypropylene resin particles mentioned in [2], wherein the inorganic foaming agent contains carbon dioxide.

[4] The expanded polypropylene resin particles mentioned in any one of [1] through [3], wherein the polypropylene resin composition contained in the polypropylene resin particles further contains a cell diameter enlarging agent in an amount in a range of not less than 0.01 part by weight and not more than 10 parts by weight with respect to 100 parts by weight of the polypropylene resin.

[5] The expanded polypropylene resin particles mentioned in [4], wherein the cell diameter enlarging agent is a compound which is present in a form of a liquid at 150 °C under a normal pressure and has a hydroxyl group.

[6] The expanded polypropylene resin particles mentioned in [5], wherein the cell diameter enlarging agent is polyethylene glycol.

[7] The expanded polypropylene resin particles mentioned in any one of [1] through [6], wherein the expanded polypropylene resin particles have an average cell diameter in a range of not less than 0.17 mm and not more than 0.30 mm.

[8] The expanded polypropylene resin particles mentioned in any one of [1] through [7], wherein the expanded polypropylene resin particles have a bulk density in a range of not less than 23 g/L and not more than 33 g/L.

[9] The expanded polypropylene resin particles mentioned in any one of [1] through [8], wherein the expanded polypropylene resin particles show two melting peaks in a DSC curve which is obtained in a case where calorimetry by a differential scanning calorimetry method is carried out with respect to the expanded polypropylene resin particles, and the expanded polypropylene resin particles have a ratio of a high-temperature side melting peak "$\{Qh / (Ql + Qh)\} \times 100$" in a range of not less than 8% and less than 16%, the ratio having been calculated from a low-temperature side melting peak heat quantity Q1 and a high-temperature side melting peak heat quantity Qh.

[10] A polypropylene resin-based in-mold expansion-molded product obtainable by in-mold molding of expanded polypropylene resin particles mentioned in any one of [1] through [9], the polypropylene resin-based in-mold expansion-molded product having an average cell diameter in a range of more than 0.18 mm and not more than 0.50 mm, and having a volume resistivity value in a range of not less than 10 $\Omega\cdot$cm and not more than 5000 $\Omega\cdot$cm.

[11] The polypropylene resin-based in-mold expansion-molded product mentioned in [10], wherein the polypropylene resin-based in-mold expansion-molded product has passed an HBF test of flame retardancy standard UL94.

[12] The polypropylene resin-based in-mold expansion-molded product mentioned in [10] or [11], wherein the polypropylene resin-based in-mold expansion-molded product has an average cell diameter in a range of not less than 0.22 mm and not more than 0.40 mm.

[13] The polypropylene resin-based in-mold expansion-molded product mentioned in any one of [10] through [12], wherein the polypropylene resin-based in-mold expansion-molded product has a molded product density in a range of not less than 23 g/L and not more than 33 g/L.

[14] The polypropylene resin-based in-mold expansion-molded product mentioned in any one of [10] through [13], wherein the polypropylene resin-based in-mold expansion-molded product shows two melting peaks in a DSC curve which is obtained in a case where calorimetry by a differential scanning calorimetry method is carried out with respect to the polypropylene resin-based in-mold expansion-molded product, and the polypropylene resin-based in-mold expansion-molded product has a ratio of a high-temperature side melting peak "{qh / (ql + qh)} × 100" in a range of not less than 6% and less than 16%, the ratio having been calculated from a low-temperature side melting peak heat quantity ql and a high-temperature side melting peak heat quantity qh.

[15] An expanded polypropylene resin particle production method comprising a first-stage expansion step of dispersing, under a stirring condition, polypropylene resin particles, water, and a foaming agent which are contained in a pressure-resistant container, heating a resultant dispersion liquid to a temperature at or higher than a softening point temperature of the polypropylene resin particles, and thereafter expanding the polypropylene resin particles by discharging the dispersion liquid in the pressure-resistant container into a pressure region having a pressure which is lower than an internal pressure of the pressure-resistant container. The expanded polypropylene resin particles are expanded polypropylene resin particles mentioned in any one of [1] through [9].

[16] The expanded polypropylene resin particle production method mentioned in [15], wherein the foaming agent is an inorganic foaming agent.

[17] The expanded polypropylene resin particle production method mentioned in [16], wherein the foaming agent contains carbon dioxide.

[18] The expanded polypropylene resin particle production method mentioned in any one of [15] through [17], wherein the polypropylene resin composition contained in the polypropylene resin particles further contains a cell diameter enlarging agent in an amount in a range of not less than 0.01 part by weight and not more than 10 parts by weight with respect to 100 parts by weight of the polypropylene resin.

[19] The expanded polypropylene resin particle production method mentioned in any one of [15] through [18], further including a second-stage expansion step of pressure-impregnating, with at least one inorganic gas selected from nitrogen, air, and carbon dioxide, the expanded polypropylene resin particles obtained in the first-stage expansion step, causing a pressure in the expanded polypropylene resin particles to be higher than a normal pressure, and thereafter further expanding the expanded polypropylene resin particles by heating the expanded polypropylene resin particles by water vapor.

Advantageous Effects of Invention

A polypropylene resin-based in-mold expansion-molded product obtainable by in-mold expansion molding of expanded polypropylene resin particles in accordance with the present invention yields an effect of improving flame retardancy with no use of a flame retardant while maintaining excellent electrical conductivity. That is, the present invention yields an effect of providing expanded polypropylene resin particles and a polypropylene resin-based in-mold expansion-molded product each of which is excellent in both electrical conductivity and flame retardancy.

In particular, the present invention yields an effect of realizing excellent flame retardancy also of a polypropylene resin-based in-mold expansion-molded product obtainable from expanded polypropylene resin particles which are obtained by expanding polypropylene resin particles by use of an inorganic foaming agent whose problem of a deterioration in flame retardancy notably occurs in a conventional technique.

Brief Description of Drawings

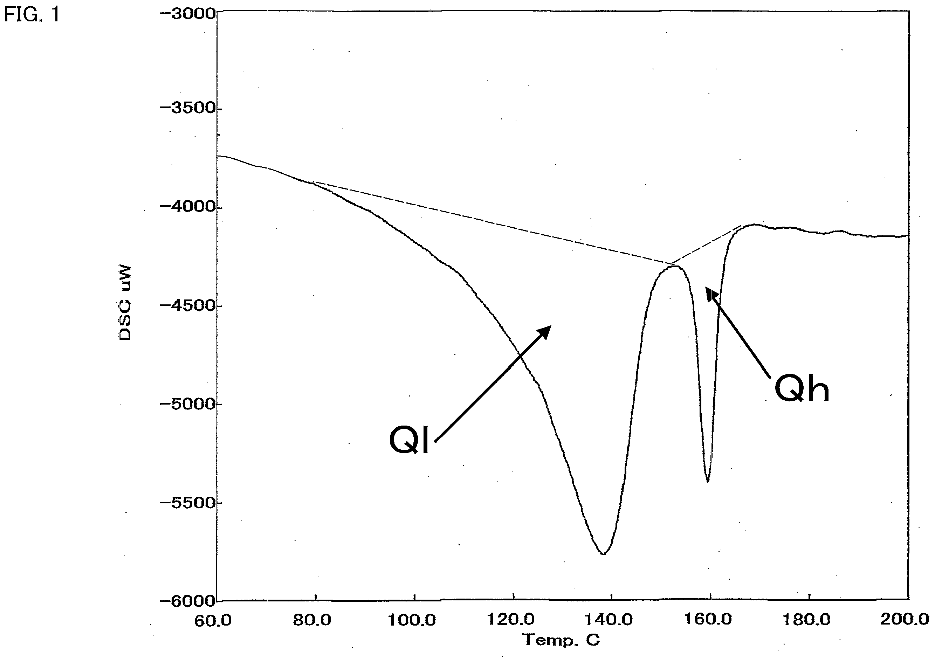

Fig. 1 is a chart showing an example of a DSC curve which is obtained in a case where calorimetry by use of a differential scanning calorimeter is carried out with respect to first-stage expanded polypropylene resin particles in accordance with the present invention. In the chart, the horizontal axis shows a temperature, and the vertical axis shows a heat absorption amount. Note that a part defined by a low-temperature side peak and a dashed line is a low-temperature side melting peak heat quantity Q1 and a part defined by a high-temperature side peak and a dashed line is a high-temperature side melting peak heat quantity Qh.

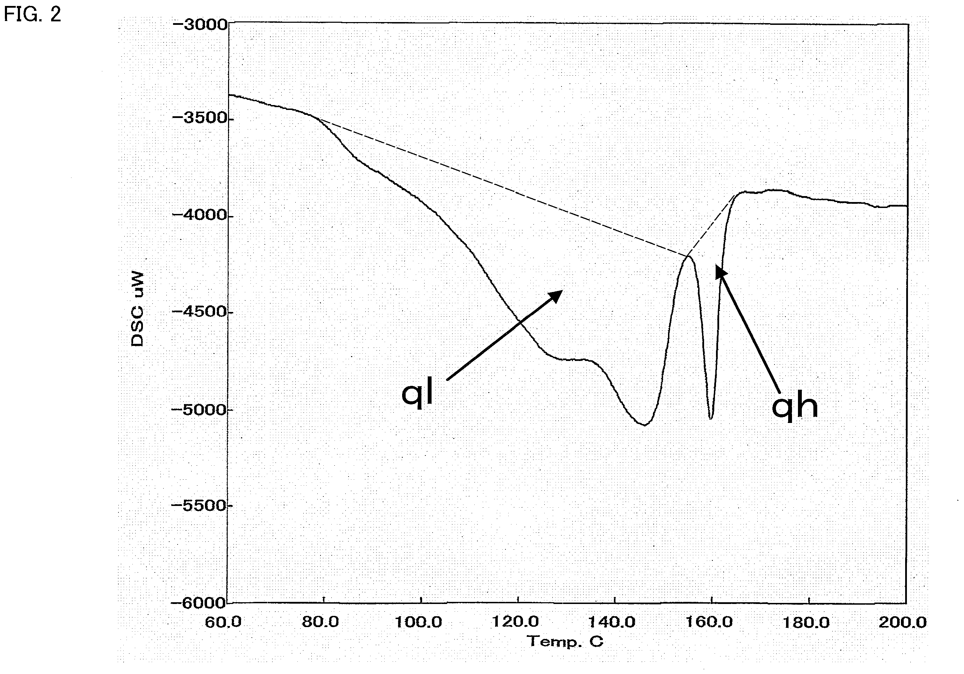

Fig. 2 is a chart showing an example of a DSC curve which is obtained in a case where calorimetry by use of a differential scanning calorimeter is carried out with respect to a polypropylene resin-based in-mold expansion-molded product in accordance with the present invention. In the chart, the horizontal axis shows a temperature, and the vertical axis shows a heat absorption amount. Note that a part defined by a low-temperature side peak and a dashed line is a low-temperature side melting peak heat quantity ql and a part defined by a high-temperature side peak and a dashed line is a high-temperature side melting peak heat quantity qh.

Description of Embodiments

The following description discusses expanded polypropylene resin particles and a polypropylene resin-based in-mold expansion-molded product in accordance with the present invention.

Expanded polypropylene resin particles in accordance with the present invention are expanded polypropylene resin particles obtainable by expanding polypropylene resin particles containing a polypropylene resin composition which contains electrically conductive carbon black in an amount in a range of not less than 11 parts by weight and not more than 25 parts by weight with respect to 100 parts by weight of polypropylene resin, the electrically conductive carbon black having a dibutyl phthalate absorption amount in a range of not less than 300 $cm^3$/100 g and not more than 600 $cm^3$/100 g, the expanded polypropylene resin particles having an average cell diameter in a range of more than 0.16 mm and not more than 0.35 mm. A polypropylene resin-based in-mold expansion-molded product in accordance with the present invention is a polypropylene resin-based in-mold expansion-molded product obtainable by in-mold molding of expanded polypropylene resin particles mentioned above, the polypropylene resin-based in-mold expansion-molded product having an average cell diameter in a range of more than 0.18 mm and not more than 0.50 mm, and having a volume resistivity value in a range of not less than 10 $\Omega \cdot$cm and not more than 5000 $\Omega \cdot$cm.

Electrically conductive carbon black for use in the present invention has a dibutyl phthalate absorption amount (DBP absorption amount) in a range of not less than 300 $cm^3$/100 g and not more than 600 $cm^3$/100 g, and preferably in a range of not less than 350 $cm^3$/100 g and not more than 500 $cm^3$/100 g.

In a case where the electrically conductive carbon black has a dibutyl phthalate absorption amount (DBP absorption amount) of less than 300 $cm^3$/100 g, it is necessary to add the electrically conductive carbon black in a large amount so as to provide excellent electrical conductivity, so that expansion of the polypropylene resin particles tends to be difficult. Even in a case where the polypropylene resin particles can be expanded, the expanded polypropylene resin particles decrease in average cell diameter, so that the expanded polypropylene resin particles tend to greatly deteriorate in flame retardancy. Also in a case where the electrically conductive carbon black has a dibutyl phthalate absorption amount (DBP absorption amount) of more than 600 $cm^3$/100 g, no further improvement in electrical conductivity and flame retardancy can be observed, so that the electrically conductive carbon black reaches a maximum of an improvement in performance.

Note here that a DBP absorption amount is a value which is measured in accordance with JIS K6217-4: 2008.

Note that coloring carbon black generally has a DBP absorption amount of less than 300 $cm^3$/100 g. This prevents the expanded polypropylene resin particles to which coloring carbon black is added from being excellent in both electrical conductivity and flame retardancy.

The electrically conductive carbon black for use in the present invention is not particularly limited provided that the electrically conductive carbon black has a DBP absorption amount in a range of not less than 300 $cm^3$/100 g and not more than 600 $cm^3$/100 g. For example, the electrically conductive carbon black is specifically exemplified by furnace black, channel black, acetylene black, thermal black.

From the viewpoint of obtainment of satisfactory electrical conductivity, the electrically conductive carbon black for use in the present invention has a BET specific surface area, which is not particularly limited, more preferably of not less than 600 $m^2$/g, and still more preferably of not less than 700 $m^2$/g. The electrically conductive carbon black which has a BET specific surface area of not less than 600 $m^2$/g makes it possible to reduce an added amount of the electrically conductive carbon black for providing excellent electrical conductivity, and to prevent an average cell diameter of the expanded polypropylene resin particles from being extremely smaller. This makes it easy to obtain excellent flame retardancy. Therefore, it is a more preferable aspect to use the electrically conductive carbon black which has a BET specific surface area of not less than 600 $m^2$/g.

Note here that a BET specific surface area is a value which is measured by use of a nitrogen adsorption method in accordance with JIS K6217-2: 2001.

For example, a specific trade name of the electrically conductive carbon black for use in the present invention is exemplified by Ketjen Black EC300J (having a DBP absorption amount of 365 $cm^3$/100 g and a BET specific surface area of 800 $m^2$/g), Ketjen Black EC600JD (having a DBP absorption amount of 495 $cm^3$/100 g and a BET specific surface area of 1270 $m^2$/g), Ensaco 350G (having a DBP absorption amount of 320 $cm^3$/100 g and a BET specific surface area of 770 $m^2$/g), Printex XE2 (having a DBP absorption amount of 380 $cm^3$/100 g and a BET specific surface area of 950 $m^2$/g).

The electrically conductive carbon black for use in the present invention is added in an amount in a range of not less than 11 parts by weight and not more than 25 parts by weight, more preferably in a range of not less than 13 parts by weight and not more than 23 parts by weight, and still more preferably in a range of not less than 17 parts by weight and not more than 22 parts by weight, with respect to 100 parts by weight of polypropylene resin.

The electrically conductive carbon black which is added in an amount of less than 11 parts by weight tends to prevent realization of satisfactory electrical conductivity, and the electrically conductive carbon black which is added in an amount of more than 25 parts by weight makes an average cell diameter extremely smaller, and tends to prevent obtainment of satisfactory flame retardancy.

For example, polypropylene resin for use in the present invention is exemplified by, but not limited to a polypropylene homopolymer, an ethylene/propylene random copolymer, a butene-1 / propylene random copolymer, an ethylene/butene-1 / propylene random copolymer, an ethylene/propylene block copolymer, a butane-1/propylene block copolymer, a propylene/chlorinated vinyl copolymer, a propylene/maleic anhydride copolymer. Of these polymers, an ethylene/propylene random copolymer and an ethylene/butene-1/propylene random copolymer are more preferable due to their satisfactory expandability and satisfactory moldability. Note here that "polypropylene resin" for use in the present invention refers to a polymer which is obtained by polymerization carried out by using propylene as at least a part of monomers and whose propylene content in a 100 wt% polymer is more than 50 wt%.

An ethylene content in a 100 wt% ethylene/propylene random copolymer or ethylene/butene-1/propylene random copolymer is preferably in a range of not less than 0.2 wt% and not more than 10 wt%. A butene-1 content in a 100 wt% ethylene/butene-1 / propylene random copolymer is preferably in a range of not less than 0.2 wt% and not more than 10 wt%. Note, however, that a total ethylene and butene-1 content is preferably in a range of not less than 0.5 wt% and not more than 10.2 wt%. In a case where an ethylene or butene-1 content in such a copolymer is less than 0.2 wt%, the copolymer tends to deteriorate in expandability and moldability. In a case where an ethylene or butene-1 content in such a copolymer is more than 10.2 wt%, the copolymer tends to deteriorate in mechanical characteristic.

For example, a melting point of the polypropylene resin for use in the present invention is exemplified by, but not limited to a melting point more preferably in a range of not less than 125 °C and not more than 150 °C, and still more preferably in a range of not less than 130 °C and not more than 145 °C. The polypropylene resin which has a melting point of less than 125 °C tends to deteriorate in heat resistance, and the polypropylene resin which has a melting point of more than 150 °C tends to have difficulty in increasing an expansion ratio.

Note here that the melting point of the polypropylene resin is obtained in a case where calorimetry by a differential scanning calorimeter method (hereinafter may be referred to as a "DSC method") is carried out with respect to the polypropylene resin. Specifically, the melting point, which is calculated based on a DSC curve, is a melting peak temperature at a second temperature increase. The DSC curve is obtained in a case where 5 mg to 6 mg of the polypropylene resin is melted by being heated from 40 °C to 220 °C at a temperature increase rate of 10 °C/min, is then crystallized by being cooled from 220 °C to 40 °C at a temperature decrease rate of 10 °C/min, and is further heated from 40 °C to 220 °C at a temperature increase rate of 10 °C/min.

A melt index (hereinafter may be referred to as "MI") of the polypropylene resin for use in the present invention is exemplified by, but not limited to a melt index more preferably in a range of not less than 3 g/10 min and not more than 30 g/10 min, still more preferably in a range of not less than 4 g/10 min and not more than 20 g/10 min, and particularly preferably in a range of not less than 5 g/10 min and not more than 18 g/10 min.

In a case where the MI of the polypropylene resin is less than 3 g/10 min, a resin composition to which the electrically conductive carbon black has been added has a too low MI, and tends to have difficulty in increasing an expansion ratio. In a case where the MI of the polypropylene resin is more than 30 g/10 min, cells of expanded polypropylene resin particles to be obtained interconnect with each other, and a polypropylene resin-based in-mold expansion-molded product tends to deteriorate in compressive strength or in surface property.

In a case where the MI of the polypropylene resin is in a range of not less than 3 g/10 min and not more than 30 g/10 min, it is easy to obtain expanded polypropylene resin particles having a comparatively large expansion ratio. Further, a polypropylene resin-based in-mold expansion-molded product obtainable by in-mold expansion molding of the expanded polypropylene resin particles has excellent surface beautifulness and a small degree of dimensional shrinkage.

Note here that an MI value is a value measured by use of an MI measuring device described in JIS K7210: 1999, and under conditions of an orifice of $2.0959 \pm 0.005$ mm in diameter, an orifice length of $8.000 \pm 0.025$ mm, a load of 2160 g, and a temperature of $230 \pm 0.2$ °C.

For example, a catalyst for polymerizing monomers during synthesis of the polypropylene resin for use in the present invention is exemplified by, but not limited to a Ziegler catalyst, a metallocene catalyst.

According to the present invention, in order to improve flame retardancy of a polypropylene resin-based in-mold expansion-molded product, it is extremely effective to add a cell diameter enlarging agent to the polypropylene resin.

The inventors of the present invention faced a problem such that, in a case where the electrically conductive carbon black is added in an amount in a range of not less than 11 parts by weight and not more than 25 parts by weight so as to provide a polypropylene resin-based in-mold expansion-molded product with electrical conductivity, the polypropylene resin-based in-mold expansion-molded product deteriorates in flame retardancy. As a result of study to solve the problem, the inventors found that enlargement of an average cell diameter of an in-mold expansion-molded product is surprisingly more effective in improving flame retardancy than addition of a so-called flame retardant. Then, the inventors found that addition of a cell diameter enlarging agent is effective as means for improving flame retardancy.

In particular, in a case where an inorganic foaming agent is used as a foaming agent, an in-mold expansion-molded product tends to have a smaller average cell diameter than in a case where an organic foaming agent is used as the foaming agent. This allows the addition of a cell diameter enlarging agent to yield a remarkable effect.

In the present invention, the "cell diameter enlarging agent" refers to a compound (substance) defined as below.

Assume that a comparison is made between (a) an average cell diameter $\alpha$ of electrically conductive expanded polypropylene resin particles (first-stage expanded particles described later) obtainable by expanding resin particles obtainable by compounding/adding, with/to polypropylene resin, a test substance A together with electrically conductive carbon black and (b) an average cell diameter $\beta$ of electrically conductive expanded polypropylene resin particles (first-stage expanded particles described later) obtainable by expanding resin particles by a raw material composition and an expansion condition (expansion method) which are identical to those by which the electrically conductive expanded polypropylene resin particles of (a) are obtained, except that no test substance A is added. In this case, when "$\alpha > \beta$" holds, the test substance A is defined as a "cell diameter enlarging agent". A specific raw material composition and a specific expansion condition in such definition are as described below.

The "raw material composition" refers to a composition in which polypropylene resin particles containing the test substance A and the electrically conductive carbon black are obtained by adding, to 100 parts by weight of the polypropylene resin, (i) the test substance A in a given amount in a range of not less than 0.1 part by weight and not more than 1 part by weight and (ii) 18 parts by weight of the electrically conductive carbon black having a dibutyl phthalate absorption amount in a range of not less than 300 $cm^3$/100 g and not more than 600 $cm^3$/100 g.

The "expansion condition (expansion method)" refers to the following condition (method). That is, an autoclave which has a capacity of 10 L and is resistant to pressure is fed with 100 parts by weight of the polypropylene resin particles obtained by the above raw material composition, 170 parts by weight of water, 2.0 parts by weight of tribasic calcium phosphate serving as an inorganic dispersing agent (described later), and 0.075 part by weight of sodium alkylsulfonate serving as an auxiliary dispersion agent, and under stirring, 5.0 parts by weight of carbon dioxide serving as a foaming agent is added to a resultant mixture. Next, the contents of the autoclave are heated to a given expansion temperature in a range of not less than "a melting point +5 °C" and not more than "the melting point +10 °C" of the polypropylene resin, and then an internal pressure of the autoclave is set to 3.0 MPa (a gauge pressure) by further adding carbon dioxide to the autoclave. Subsequently, after the autoclave is retained as it is for 30 minutes, a valve provided in a lower part of the autoclave is opened, and the contents of the autoclave are discharged under an atmospheric pressure (one atmospheric pressure) through an aperture orifice of 4.0 mm in diameter, so that the expanded polypropylene resin particles containing the test substance A and the electrically conductive carbon black are obtained. In this case, in order that an expansion pressure is constant, a back pressure is applied by injecting carbon dioxide from an upper part of the autoclave. Thereafter, the average cell diameter $\alpha$ of the expanded polypropylene resin particles containing the test substance A and having been obtained under the above expansion condition is measured.

Meanwhile, expanded polypropylene resin particles containing no test substance A is obtained under a similar expansion condition except that no test substance A is contained. The average cell diameter $\beta$ of the obtained expanded polypropylene resin particles containing no test substance A is measured.

In a case where "$\alpha > \beta$" holds, the test substance A is defined as the "cell diameter enlarging agent".

Note that the test substance A is evaluated from a given amount in a range of not less than 0.1 part by weight and not more than 1 part by weight. However, in a case where "$\alpha > \beta$" holds in evaluation from any amount in the above range, the test substance A is defined as the cell diameter enlarging agent of the present invention. For example, in evaluation of a test substance A1, there is a case where "$\alpha > \beta$" does not hold when the test substance A1 is added in an amount of 0.1 part by weight, whereas "$\alpha > \beta$" holds when the test substance A1 is added in an amount of 0.5 part by weight or 1 part by weight. In this case, the test substance A1 is the cell diameter enlarging agent of the present invention.

Meanwhile, in evaluation of a test substance A2, even if the test substance A2 cannot be evaluated because no polypropylene resin particles can be obtained due to addition of the test substance A2 in an amount of 1 part by weight, which is too large, there is a case where the test substance A2 can be evaluated by being added in an amount of 0.5 part by weight, so that "$\alpha > \beta$" holds. Also in this case, the test substance A2 is the cell diameter enlarging agent of the present invention.

Note here that an average cell diameter of the expanded polypropylene resin particles refers to a value which is measured by the following method.

First, the expanded polypropylene resin particles are cut substantially at their respective centers with special care so as not to break their respective cell membranes. A cut surface of each of those expanded particles is observed (an observation photograph is taken) by use of a microscope [VHX digital microscope manufactured by KEYENCE CORPORATION].

On an observation display of the microscope or on the observation photograph taken by use of the microscope, a line segment equivalent to a length of 1000 $\mu$m is drawn in a part except a top layer part of the each of the expanded particles. The number n of cells through which the line segment passes is measured, and a cell diameter is calculated based on 1000/n ($\mu$m). A similar operation is carried out with respect to 10 expanded particles, and an average of respective calculated cell diameters of the 10 expanded particles is regarded as the average cell diameter of the expanded polypropylene resin particles.

A more preferable example of the cell diameter enlarging agent for use in the present invention can be exemplified by a compound which is present in a form of a liquid at 150 °C under a normal pressure (one atmospheric pressure) and has a hydroxyl group.

Though depending on, for example, a melting point of polypropylene resin to be used, an expansion temperature at which the expanded polypropylene resin particles are produced is approximately 150 °C or so. Accordingly, the compound which is present in a form of a liquid at 150 °C under a normal pressure (one atmospheric pressure) and has a hydroxyl group and which is added to the polypropylene resin is present in the resin in a liquid state at the expansion temperature, so that the compound does not act as an expansion nucleation point. In addition, the compound, which has a hydroxyl group, absorbs water for use in an expansion step as described later and then vaporizes at a moment when the absorbed water is expanded. This seems to cause the expanded polypropylene resin particles to have an enlarged cell diameter.

For example, the cell diameter enlarging agent for use in the present invention is specifically exemplified by polyethylene glycol, glycerin, glycerin fatty acid monoester, glycerin fatty acid diester, polyoxyethylene alkyl ether, sorbitan fatty acid ester, polyoxyethylene monoester, alkyl alkanolamide, polyoxyethylene alkylamine, a polyolefin and polyether block copolymer, a compound (substance) having a melting point of less than 150 °C and a boiling point of more than 150 °C also acts as the cell diameter enlarging agent of the present invention. For example, such a compound is specifically exemplified by glycerol monostearate, glycerol distearate. As the cell diameter enlarging agent, a compound may be used alone or a plurality of compounds may be used in combination.

As the cell diameter enlarging agent, of the compounds mentioned above, polyethylene glycol is more preferable, and polyethylene glycol having an average molecular weight in a range of not less than 200 and not more than 6000 is the most preferable.

An added amount of the cell diameter enlarging agent for use in the present invention is not particularly limited provided that an added amount necessary for enlargement of the average cell diameter of the expanded polypropylene resin particles is selected. The added amount is more preferably in a range of not less than 0.01 part by weight and not more than 10 parts by weight, more preferably in a range of not less than 0.2 part by weight and not more than 5 parts by weight, and particularly preferably in a range of 0.3 part by weight and not more than 2 parts by weight, with respect to 100 parts by weight of the polypropylene resin.

In a case where the cell diameter enlarging agent is added in an amount of less than 0.01 part by weight, an effect of enlarging the average cell diameter tends to be weak. Even in a case where the cell diameter enlarging agent is added in an amount of more than 10 parts by weight, the effect of the enlargement is not enhanced, so that the effect of the enlargement tends to be saturated. Note that an effective added amount of the cell diameter enlarging agent varies depending on a kind of the cell diameter enlarging agent.

Patent Literature 1 (Japanese Patent Application Publication, Tokukaihei, No. 7-300536 A) listed earlier describes use of metal salt and/or an amide compound of a higher fatty acid together with electrically conductive carbon black. Specific examples of the metal salt include lead stearate, cadmium stearate, barium stearate, calcium stearate, zinc stearate, magnesium stearate. Specific examples of the amide compound include stearic amide, palmitic amide, oleic amide, methylene bis stearamide, ethylene bis stearamide. However, these compounds, some of which have a melting point of not more than 150 °C, each have no hydroxyl group. Therefore, the compounds are each too low in water absorbing capacity to act as the cell diameter enlarging agent. This is clear from Patent Literature (Japanese Patent Application Publication, Tokukaihei, No. 8-59876 A) which mentions aliphatic metal salt and fatty acid amide as additives for making a cell diameter extremely smaller.

Patent Literature 2 (Japanese Patent Application Publication, Tokukaihei, No. 9-202837 A) listed earlier describes use of a water-soluble inorganic matter together with electrically conductive carbon black. Specific examples of the water-soluble inorganic matter include borax, zinc borate, sodium borate, magnesium borate, sodium chloride, magnesium chloride, calcium chloride. However, though these water-soluble inorganic matters, which are soluble in water, each absorb water for use in an expansion step, the water-soluble inorganic matters, whose melting point greatly exceeds 150 °C, are each present in a form of a solid even at an expansion temperature. Generally, a solid substance, which acts as an expansion nucleation point, increases the number of cells, so that it is highly likely that a cell diameter will be extremely smaller (an average cell diameter will be smaller). This prevents such a solid substance from acting as the cell diameter enlarging agent. Further, Examples of Patent Literature 2, which mention an average cell diameter, merely state that the average cell diameter is not less than 0.05 mm. Therefore, a water-soluble inorganic matter described in Patent Literature 2 has difficulty in realizing an average cell diameter of more than 0.16 mm of the expanded polypropylene resin particles of the present invention, and is also incapable of improving flame retardancy.

Patent Literature 8 (Japanese Patent Application Publication, Tokukai, No. 2010-209145 A) listed earlier describes expanded polypropylene resin particles obtainable by expanding polypropylene resin containing a polypropylene resin composition which contains coloring carbon black having a specific aggregation structure in an amount in a range of not less than 0.05 part by weight and not more than 20 parts by weight (however, in an amount of 4.0 to 4.5 parts by weight in Examples) with respect to 100 parts by weight of polypropylene resin and which contains a hindered amine flame retardant as a flame retardant. Examples of Patent Literature 8 state that expanded polypropylene resin particles for which isobutane is used as a foaming agent have an average cell diameter of 0.20 to 0.28 mm. Further, according to paragraph [0070] of the specification of Patent Literature 8, in a case where carbon dioxide is used as a foaming agent, in order to obtain expanded particles which are high in expansion ratio and uniform in cell diameter, it is preferable to add, to polypropylene resin, polyethylene glycol having a molecular weight of not more than 300, glycerin (note, however, that Patent Literature 8 has no Example of this). However, Patent Literature 8 does not describe at all a unique effect which is yielded in a case where carbon dioxide is used as a foaming agent, i.e., an effect such that expanded polypropylene resin particles which have improved in flame retardancy can be obtained with no use of a flame retardant. According to Examples 5 through 8 of Patent Literature 8, though addition of petroleum resin which is not flame-retardant seems to improve flame retardancy of a polypropylene resin-based in-mold expansion-molded product, flame retardancy is technically improved by use of an aggregation (structure) of carbon black aggregates (carbon black master batches) having an average area of a specific value. That is, it cannot be said that flame retardancy of the polypropylene resin-based in-mold expansion-molded product of Patent Literature 8 is improved by the addition of the petroleum resin.

Generally, some flame retardants tend to make a cell diameter extremely smaller. This may cause a deterioration in flame retardancy. Accordingly, Patent Literature 8 has no technical idea of improving flame retardancy of expanded polypropylene resin particles by using carbon dioxide as a foaming agent. In contrast, the present invention improves flame retardancy with no use of a flame retardant by applying a technique for increasing an average cell diameter of an in-mold expansion-molded product to a polypropylene resin-based in-mold expansion-molded product which realizes excellent electrical conductivity by use of electrically conductive carbon black showing a specific DBP absorption amount, specifically by, for example, using carbon dioxide or isobutane serving as a foaming agent and using, as needed, a cell diameter enlarging agent. It is novel knowledge acquired by the inventors of the present invention that flame retardancy is improved with no use of a flame retardant by using a specific foaming agent and using, as needed, a cell diameter enlarging agent. That is, the present invention is based on a technical idea of improving flame retardancy with no use of a flame retardant by using a specific foaming agent and using, as needed, a cell diameter enlarging agent.

According to the present invention, normally, a polypropylene resin composition which contains electrically conductive carbon black in an amount in a range of not less than 11 parts by weight and not more than 25 parts by weight with respect to 100 parts by weight of polypropylene resin, the electrically conductive carbon black having a DBP absorption amount in a range of not less than 300 cm$^3$/100 g and not more than 600 cm$^3$/100 g, and which contains, as needed, a cell diameter enlarging agent in an amount in a range of not less than 0.01 part by weight and not more than 10 parts by weight with respect to 100 parts by weight of the polypropylene resin becomes polypropylene resin particles by being formed, so as to be easily used to be expanded, to have a desired particulate shape such as a cylindrical shape, an oval spherical shape, a spherical shape, a cubic shape, a rectangular shape, by being melt-kneaded in advance by use of a extruder, a kneader, a Banbury mixer, or a roll.

In this case, the electrically conductive carbon black and the cell diameter enlarging agent, each of which is subjected to the melt-kneading, are substantially uniformly dispersed in resin particles. As a result, expanded polypropylene resin particles to be obtained have no clear distinction between an external layer and a core layer thereof. This allows the electrically conductive carbon black and the cell diameter enlarging agent to be substantially uniformly dispersed throughout the expanded particles.

Further, the polypropylene resin particles of the present invention may be prepared by appropriately adding, to the polypropylene resin, various additives such as an antioxidant, a light resistance improving agent, an antistatic agent, a pigment, a flame retardant, a cell nucleating agent. As in the case of the cell diameter enlarging agent, such additives are preferably added to the resin during a process for producing the polypropylene resin particles.

Note, however, that, of these general additives, it is impossible to use an additive which inhibits an effect of the present invention, an additive which prevents enlargement of a cell diameter (makes a cell diameter extremely smaller). For example, a cell nucleating agent such as talc, kaolin, zinc borate, generally tends to make a cell diameter extremely smaller. Therefore, in a case where a cell nucleating agent is added, a kind and an added amount thereof needs to be carefully selected so that a cell diameter is not made extremely smaller. In particular, it is undesirable in the present invention to add talc, which has an extremely strong effect of making a cell diameter extremely smaller.

Further, it is impossible to use a compound which is generally known as a flame retardant but prevents enlargement of a cell diameter (makes a cell diameter extremely smaller). This is because such a compound acts not only to prevent an improvement in flame retardancy but also to cause a deterioration in flame retardancy.

Note that the present invention allows an improvement in flame retardancy of a polypropylene resin-based in-mold expansion-molded product by addition of a cell diameter enlarging agent. Therefore, in a case where a flame retardant is added, it may be possible to make an added amount of the flame retardant smaller than a conventional added amount. This makes it possible to say that addition of a flame retardant in a smaller amount is a preferable aspect of a polypropylene resin-based in-mold expansion-molded product in accordance with the present invention.

Expanded polypropylene resin particles in accordance with the present invention can be produced by a production method described below.

For example, the polypropylene resin particles, water, and a foaming agent which are contained in a pressure-resistant container are dispersed under a stirring condition, and the contents of the pressure-resistant container are heated to a temperature at or higher than a softening point temperature of the polypropylene resin particles. Thereafter, the polypropylene resin particles are expanded (an expansion step is carried out) by discharging a resultant dispersion liquid in the pressure-resistant container into a pressure region having a pressure which is lower than an internal pressure of the pressure-resistant container, so that the expanded polypropylene resin particles are produced. The pressure region having a pressure which is lower than the internal pressure of the pressure-resistant container is preferably an atmospheric pressure (one atmospheric pressure). Note that the expansion step of expanding the polypropylene resin particles is referred to a first-stage expansion step.

Note here that from the viewpoint of securement of expandability of the polypropylene resin particles, in the case of heating the contents of the pressure-resistant container to a temperature which is at or higher than the softening point temperature of the polypropylene resin particles, the temperature is preferably is in a range of not less than "a melting point -20 °C" and not more than "the melting point +10 °C" of the polypropylene resin particles. The foaming agent for use in the present invention is specifically exemplified by, but not particularly limited to organic foaming agents such as propane, normal butane, isobutane, normal pentane, isopentane, hexane, cyclobutane, cyclopentane, and inorganic foaming agents such as carbon dioxide, water, air, or nitrogen. These foaming agents may be used alone or in combination of two or more kinds.

Of the foaming agents, normal butane or isobutane is more preferable from the viewpoint of allowing enlargement of an average cell diameter and allowing an improvement in flame retardancy of a polypropylene resin-based in-mold expansion-molded product. Meanwhile, from the viewpoint that an effect of the present invention is most clearly revealed, an inorganic foaming agent such as carbon dioxide, water, air, nitrogen, or the like is more preferably used, and a foaming agent containing carbon dioxide is most preferably used. Note here that use of an inorganic foaming agent easily makes extremely smaller an average cell diameter of the expanded polypropylene resin particles. In particular, in a case where electrically conductive carbon black is contained in an amount in a range of not less than 11 parts by weight and not more than 25 parts by weight, the average cell diameter is more easily made extremely smaller. This causes a problem of a significant deterioration in flame retardancy of a polypropylene resin-based in-mold expansion-molded product. However, according to the present invention, use of a cell diameter enlarging agent (described earlier) in combination surprisingly allows an improvement in flame retardancy with no use of a flame retardant.

According to the present invention, a used amount of the foaming agent is not particularly limited, and the foaming agent may be appropriately used in accordance with a desired expansion ratio of the expanded polypropylene resin particles. For example, a specific used amount of the foaming agent is preferably in a range of not less than 2 parts by weight and not more than 60 parts by weight with respect to 100 parts by weight of the polypropylene resin particles.

Note, however, that it is possible to use (divert) water for use in dispersion of the polypropylene resin particles in the pressure-resistant container in a case where water is used as the foaming agent. In this case, the polypropylene resin particles which contain a hydrophilic compound or a water-absorbing compound in advance easily absorb water in the pressure-resistant container. This allows water to be easily used as the foaming agent. The hydrophilic compound and the water-absorbing compound are not particularly limited in kind and used amount. According to the present invention, given that the cell diameter enlarging agent (described earlier) has a hydrophilic property or a water-absorbing property, and allows enlargement of a cell diameter, it is preferable that the cell diameter enlarging agent is also used as the hydrophilic compound or the water-absorbing compound.

A used amount of water which is used as the foaming agent is more preferably in a range of not less than 50 parts by weight and not more than 500 parts by weight, and still more preferably in a range of not less than 100 parts by weight and not more than 350 parts by weight, with respect to 100 parts by weight of the polypropylene resin particles. This allows the polypropylene resin particles to be dispersed in the pressure-resistant container and allows water to be used as the foaming agent.

In a case where a foaming agent containing carbon dioxide is used, it is more preferable to use polyethylene glycol, glycerin, as the cell diameter enlarging agent. This makes it possible to easily obtain the expanded polypropylene resin particles having an average cell diameter in a range of more than 0.16 mm and not more than 0.35 mm.

The pressure-resistant container which is used to produce the expanded polypropylene resin particles is not particularly limited provided that the pressure-resistant container is resistant to an internal pressure and an internal temperature of the container in the production method in accordance with the present invention. For example, the pressure-resistant container is specifically exemplified by an autoclave pressure-resistant container.

In order to produce the expanded polypropylene resin particles, it is more preferable to use an inorganic dispersing agent together with the polypropylene resin particles, water, and the foaming agent. For example, the inorganic dispersing agent is exemplified by tribasic calcium phosphate, tribasic magnesium phosphate, basic magnesium carbonate, calcium carbonate, basic zinc carbonate, aluminum oxide, iron oxide, titanium oxide, aluminosilicate, kaolin, barium sulfate.

According to the present invention, in order to improve dispersibility of the polypropylene resin particles in the pressure-resistant container, it is more preferable to further use an auxiliary dispersion agent in combination. For example, the auxiliary dispersion agent is exemplified by sodium dodecylbenzenesulfonate, sodium alkanesulfonate, sodium alkylsulfonate, sodium alkyldiphenyletherdisulfonate, sodium $\alpha$-olefin sulfonate.

Respective used amounts of the inorganic dispersing agent and the auxiliary dispersion agent are not particularly limited, and the used amounts can be set in accordance with their respective kinds, and/or a kind and a used amount of polypropylene resin particles to be used. Normally, with respect to 100 parts by weight of water, the inorganic dispersing agent is preferably used in an amount in a range of not less than 0.2 part by weight and not more than 3 parts by weight, and the auxiliary dispersion agent is preferably used in an amount in a range of not less than 0.001 part by weight and not more than 0.1 part by weight.

The expanded polypropylene resin particles in accordance with the present invention have an average cell diameter preferably in a range of more than 0.16 mm and not more than 0.35 mm, and more preferably in a range of not less than 0.17 mm and not more than 0.30 mm. In a case where the expanded polypropylene resin particles have an average cell diameter of not more than 0.16 mm, the expanded polypropylene resin particles which have been molded into a polypropylene resin-based in-mold expansion-molded product tend to deteriorate in flame retardancy. According to the present invention, which contains the electrically conductive carbon black in a large amount, it is substantially difficult to obtain the expanded polypropylene resin particles having an average cell diameter of more than 0.35 mm.

The expanded polypropylene resin particles in accordance with the present invention more preferably have a comparatively low bulk density in a range of not less than 23 g/L and not more than 33 g/L. The expanded polypropylene resin particles which have a bulk density of less than 23 g/L may be unable to pass an HBF test of flame retardancy standard UL94, which is a high-level flame retardancy standard. Meanwhile, the expanded polypropylene resin particles which have a bulk density of more than 33 g/L originally easily realize flame retardancy, so that effectiveness achieved by employing the present invention tends to deteriorate.

Note that the expanded polypropylene resin particles having a comparatively low bulk density can be obtained merely by carrying out the first-stage expansion step described earlier. Note, however, that there is a case where an inorganic foaming agent is used as the foaming agent and the expanded polypropylene resin particles having a comparatively low bulk density cannot be obtained merely by carrying out the first-stage expansion step. In such a case, the expanded polypropylene resin particles having a comparatively low bulk density can be obtained by carrying out a second-stage expansion step of further expanding the expanded polypropylene resin particles obtained by carrying out the first-stage expansion step, and thereafter carrying out a third-stage expansion step of further expanding the expanded polypropylene resin particles which have been subjected to the second-stage expansion step.

An example of a method for carrying out the second-stage expansion step (further, the third-stage expansion step) can be exemplified by a method described below.

For example, after the expanded polypropylene resin particles obtained by carrying out the first-stage expansion step are fed into a pressure-resistant sealed container, inorganic gas such as nitrogen, air, carbon dioxide, is injected into the pressure-resistant sealed container at a pressure (gauge pressure) in a range of not less than 0.1 MPa and not more than 0.6 MPa. Next, after causing a pressure in the expanded polypropylene resin particles to be higher than a normal pressure (one atmospheric pressure) by pressure-impregnating (pressure-treating) the expanded polypropylene resin particles with the inorganic gas for a time in a range of not less than 1 hour and not more than 48 hours, the expanded polypropylene resin particles thus pressure-impregnated are further expanded by being heated by water vapor having a pressure (gauge pressure) in a range of not less than 0.01 MPa and not more than 0.4 MPa. This makes it possible to obtain the expanded polypropylene resin particles having a lower bulk density (having a higher expansion ratio). Further, in a case where the expanded polypropylene resin particles obtained by carrying out the second-stage expansion step are further expanded as in the case of the second-stage expansion step, it is possible to obtain the expanded polypropylene resin particles having a still lower bulk density (having a still higher expansion ratio).

Note that the expanded polypropylene resin particles obtained by carrying out the first-stage expansion step are referred to as first-stage expanded particles, the expanded polypropylene resin particles obtained by carrying out the second-stage expansion step are referred to as second-stage expanded particles, and the expanded polypropylene resin particles obtained by carrying out the third-stage expansion step are referred to as third-stage expanded particles.

The expanded polypropylene resin particles in accordance with the present invention preferably has an average cell diameter in a range of more than 0.16 mm and not more than 0.35 mm. Accordingly, even in a case where the first-stage expanded particles has an average cell diameter of not more than 0.16 mm, the average cell diameter can be increased by causing the first-stage expanded particles to be the second-stage expanded particles (or third-stage expanded particles). This makes it possible to obtain the expanded polypropylene resin particles having an average cell diameter in a range of more than 0.16 mm and not more than 0.35 mm.

The expanded polypropylene resin particles in accordance with the present invention show two melting peaks in a DSC curve which is obtained in a case where calorimetry by a differential scanning calorimetry method is carried out with respect to the expanded polypropylene resin particles, and the expanded polypropylene resin particles have a ratio of a high-temperature side melting peak "{Qh / (Q1 + Qh)} $\times$ 100" (hereinafter may be referred to as a "DSC ratio") preferably in a range of not less than 5% and not more than 20%, and more preferably in a range of not less than 8% and less than 16%, the ratio having been calculated from a low-temperature side melting peak heat quantity Q1 and a high-temperature side melting peak heat quantity Qh. The DSC ratio which is in the above range makes it easy to lower a bulk density, and makes it easy to obtain a polypropylene resin-based in-mold expansion-molded product which is excellent in fusibility and high in surface beautifulness.

The expanded polypropylene resin particles which have a DSC ratio of less than 5% easily cause cells in the expanded polypropylene resin particles to be interconnected, so that a polypropylene resin-based in-mold expansion-molded product which has been obtained by in-mold expansion molding of the expanded polypropylene resin particles tends to easily contract, and a wrinkle tends to easily occur on a surface. Meanwhile, the expanded polypropylene resin particles which have a DSC ratio of more than 20% tend to make it difficult to lower a bulk density.

Note here that, as shown in Fig. 1, in a DSC curve which is obtained by heating the expanded polypropylene resin particles from 40 °C to 220 °C at a rate of 10 °C/min and in which the expanded polypropylene resin particles show two melting peaks, Q1 shows a low-temperature side melting peak heat quantity which is a heat quantity defined by a low-temperature side peak of the DSC curve and a tangent from a local maximum point between the low-temperature side peak and a high-temperature side peak of the DSC curve to a melting start base line. Qh shows a high-temperature side melting peak heat quantity which is a heat quantity defined by the high-temperature side peak of the DSC curve and a tangent from the local maximum point between the low-temperature side peak and the high-temperature side peak to a melting end base line.

The high-temperature side melting peak heat quantity Qh of the expanded polypropylene resin particles is not particularly limited. However, the expanded polypropylene resin particles have a high-temperature side melting peak heat quantity Qh preferably in a range of not less than 2 J/g and not more than 20 J/g, more preferably in a range of not less than 3 J/g and not more than 15 J/g, and still more preferably in a range of not less than 4 J/g and not more than 10 J/g. The expanded polypropylene resin particles which have a high-temperature side melting peak heat quantity Qh of less than 2 J/g easily cause cells in the expanded polypropylene resin particles to be interconnected, so that a molded polypropylene resin-based in-mold expansion-molded product which has been obtained by in-mold expansion molding of the expanded polypropylene resin particles tends to easily contract, and a wrinkle tends to easily occur on a surface. Meanwhile, the expanded polypropylene resin particles which have a high-temperature side melting peak heat quantity Qh of more than 20 J/g tend to make it difficult to increase an expansion ratio.

Note that the DSC ratio or the high-temperature side melting peak heat quantity can be appropriately adjusted by, for example, (i) a retention time in which the polypropylene resin particles are heated and then expanded (substantially reach an expansion temperature and are then expanded) in the first-stage expansion step, (ii) the expansion temperature at which the polypropylene resin particles are expanded in the first-stage expansion step, (iii) an expansion pressure at which the polypropylene resin particles are expanded in the first-stage expansion step, and (iv) the like. Generally, the DSC ratio or the high-temperature side melting peak heat quantity tends to be higher by making the retention time longer, lowering the expansion temperature, and lowering the expansion pressure.

As described earlier, a condition under which a desired DSC ratio or high-temperature side melting peak heat quantity is obtained can be easily discovered by carrying out several trial experiments in which the retention time, the expansion temperature, and the expansion pressure are appropriately systematically changed. Note that the expansion pressure can be adjusted by an amount of the foaming agent.

The inorganic dispersing agent adheres to a surface of the expanded polypropylene resin particles in accordance with the present invention in an amount preferably of not more than 2000 ppm, more preferably of not more than 1300 ppm, and most preferably of not more than 800 ppm. In a case where the inorganic dispersing agent adheres to the surface in an amount of more than 2000 ppm, the expanded polypropylene resin particles tend to deteriorate in fusibility while being subjected to in-mold expansion molding.

The most preferable aspect of the expanded polypropylene resin particles in accordance with the present invention which are obtainable by expanding polypropylene resin particles containing a polypropylene resin composition which contains electrically conductive carbon black in an amount in a range of not less than 11 parts by weight and not more than 25 parts by weight with respect to 100 parts by weight of polypropylene resin, the electrically conductive carbon black having a dibutyl phthalate absorption amount in a range of not less than 300 $cm^3$/100 g and not more than 600 $cm^3$/100 g are expanded polypropylene resin particles in which not only a foaming agent containing carbon dioxide (carbon dioxide in particular) but also a cell diameter enlarging agent such as polyethylene glycol is used to cause the expanded polypropylene resin particles to have an average cell diameter in a range of more than 0.16 mm and not more than 0.35 mm. This further improves flame retardancy with no use of a flame retardant. Therefore, it is possible to obtain expanded polypropylene resin particles and a polypropylene resin-based in-mold expansion-molded product each of which is more excellent in both electrical conductivity and flame retardancy.

According to the present invention, a polypropylene resin-based in-mold expansion-molded product can be obtained from expanded polypropylene resin particles by use of the following conventionally known methods:

a) a method for carrying out in-mold expansion molding by filling a mold with expanded polypropylene resin particles as they are;

b) a method for carrying out in-mold expansion molding after injecting, in advance, inorganic gas such as air into expanded polypropylene resin particles so as to provide the expanded polypropylene resin particles with an internal pressure (expansion capability);

c) a method for carrying out in-mold expansion molding by filling a mold with expanded polypropylene resin particles which are in compression; and

d) the like.

A specific method for obtaining a polypropylene resin-based in-mold expansion-molded product from the expanded polypropylene resin particles in accordance with the present invention can be exemplified by the following method. For example, the expanded polypropylene resin particles which have been fed into a pressure-resistant container are pressed in advance by use of inorganic gas, and the expanded polypropylene resin particles thus pressed are provided with an internal pressure (expansion capability) by injecting thereto the inorganic gas. Next, a molding space which is constituted by two molds (a male mold and a female mold) and which can be closed but cannot be sealed is filled with the expanded polypropylene resin particles, and by using water vapor (heated water vapor) serving as a heating medium to mold the expanded polypropylene resin particles at a pressure (gauge pressure) approximately in a range of not less than 0.1 MPa and not more than 0.4 MPa and for a heating time approximately in a range of not less than 3 seconds and not more than 30 seconds, the expanded polypropylene resin particles are fused while being expanded. Then, the mold is opened after being cooled by water-cooling to an extent of allowing prevention of deformation of a polypropylene resin-based in-mold expansion-molded product which has been taken out. The polypropylene resin-based in-mold expansion-molded product is thus obtained.

For example, the internal pressure of the expanded polypropylene resin particles can be adjusted in the pressure-resistant container for a pressure time in a range of not less than 1 hour and not more than 48 hours, at a pressure temperature in a range of not less than a room temperature (25 °C) and not more than 80 °C, and by pressing the expanded polypropylene resin particles at a pressure (gauge pressure) in a range of not less than 0.1 MPa and not more than 2.0 MPa by use of inorganic gas such as air, nitrogen.

A polypropylene resin-based in-mold expansion-molded product in accordance with the present invention which polypropylene resin-based in-mold expansion-molded product is produced by the above method has an average cell diameter preferably in a range of more than 0.18 mm and not more than 0.50 mm, and more preferably in a range of not less than 0.22 mm and not more than 0.40 mm. The polypropylene resin-based in-mold expansion-molded product has an average cell diameter of not more than 0.18 mm tends to deteriorate in flame retardancy. The present invention, which contains the electrically conductive carbon black in a large amount, tends to have substantial difficulty in obtaining the polypropylene resin-based in-mold expansion-molded product having an average cell diameter of more than 0.50 mm.

Note that an average cell diameter in the above range of the polypropylene resin-based in-mold expansion-molded product in accordance with the present invention can be generally achieved by in-mold expansion molding of the expanded polypropylene resin particles which are set to have an average cell diameter in a range of more than 0.16 mm and not more than 0.35 mm before being subjected to the in-mold expansion molding.

The polypropylene resin-based in-mold expansion-molded product in accordance with the present invention has a volume resistivity value preferably in a range of not less than 10 $\Omega \cdot$cm and not more than 5000 $\Omega \cdot$cm, more preferably in a range of not less than 10 $\Omega \cdot$cm and not more than 3000 $\Omega \cdot$cm, and still more preferably in a range of not less than 10 $\Omega \cdot$cm and not more than 2000 $\Omega \cdot$cm. The polypropylene resin-based in-mold expansion-molded product which has a volume resistivity value of more than 5000 $\Omega \cdot$cm tends to be insufficient to be used for (i) a shock-absorbing material of an electronic device or a precision device, (ii) a parts tray of a robot line, or (iii) a radio wave absorber which is used to, for example, take measures against radiation noise of an anechoic chamber or an electronic device, or take preventive measures against radio reflection. Meanwhile, the present invention, which contains the electrically conductive carbon black in a large amount, makes it difficult to cause the polypropylene resin-based in-mold expansion-molded product to have a volume resistivity value of less than 10 $\Omega \cdot$cm.

The polypropylene resin-based in-mold expansion-molded product in accordance with the present invention preferably has passed an HBF test of flame retardancy standard UL94. Note that flame retardancy of the polypropylene resin-based in-mold expansion-molded product can be easily realized by setting an average cell diameter of the polypropylene resin-based in-mold expansion-molded product to be in a range of more than 0.18 mm and not more than 0.50 mm.

The polypropylene resin-based in-mold expansion-molded product in accordance with the present invention has a comparatively low molded product density preferably in a range of not less than 23 g/L and not more than 33 g/L, and more preferably in a range of not less than 25 g/L and not more than 31 g/L. The polypropylene resin-based in-mold expansion-molded product which has a molded product density of less than 23 g/L may be unable to pass the HBF test of flame retardancy standard UL94, which is a high-level flame retardancy standard. Meanwhile, the polypropylene resin-based in-mold expansion-molded product which has a molded product density of more than 33 g/L originally easily realize flame retardancy, so that effectiveness achieved by employing the present invention tends to deteriorate.

The polypropylene resin-based in-mold expansion-molded product in accordance with the present invention, which polypropylene resin-based in-mold expansion-molded product shows two melting peaks in a DSC curve which is obtained in a case where calorimetry by a differential scanning calorimetry method is carried out with respect to the polypropylene resin-based in-mold expansion-molded product, has a ratio of a high-temperature side melting peak "{qh / (q1 + qh)} $\times$ 100" (hereinafter may be referred to as a "DSC ratio") preferably in a range of not less than 4% and not more than 20%, and more preferably in a range of not less than 6% and less than 16%, the ratio having been calculated from a low-temperature side melting peak heat quantity ql and a high-temperature side melting peak heat quantity qh.

The DSC ratio which is in the above range makes it easy to obtain the polypropylene resin-based in-mold expansion-molded product which is excellent in fusibility and high in surface beautifulness. The polypropylene resin-based in-mold expansion-molded product having a DSC ratio which is in the above range can be obtained by in-mold expansion molding of the expanded polypropylene resin particles having a DSC ratio in a range of not less than 5% and not more than 20%. The polypropylene resin-based in-mold expansion-molded product which has a DSC ratio of less than 4% easily causes cells in the expanded polypropylene resin particles to be interconnected. Meanwhile, the polypropylene resin-based in-mold expansion-molded product which has a DSC ratio of more than 20% tends deteriorate in fusibility.

Note here that a DSC curve of the polypropylene resin-based in-mold expansion-molded product, which DSC curve is influenced by a heat history during the in-mold expansion molding, is not totally identical to the DSC curve of the expanded polypropylene resin particles. In particular, there is a case where a shoulder or slight peak can be observed in a region of not less than 100 °C and not more than 140 °C of a low-temperature side peak (low-temperature side melting peak). The present invention regards such a shoulder or slight peak as a part of the low-temperature side peak.

As shown in Fig. 2, in a DSC curve which is obtained in a case where the polypropylene resin-based in-mold expansion-molded product is heated from 40 °C to 220 °C at a rate of 10 °C/min, the polypropylene resin-based in-mold expansion-molded product shows two melting peaks. q1 shows a low-temperature side melting peak heat quantity which is a heat quantity defined by a low-temperature side peak of the DSC curve and a tangent from a local maximum point between the low-temperature side peak and a high-temperature side peak of the DSC curve to a melting start base line. qh shows a high-temperature side melting peak heat quantity which is a heat quantity defined by the high-temperature side peak of the DSC curve and a tangent from the local maximum point between the low-temperature side peak and the high-temperature side peak to a melting end base line.

The high-temperature side melting peak heat quantity qh of the polypropylene resin-based in-mold expansion-molded product is not particularly limited. However, the polypropylene resin-based in-mold expansion-molded product has a high-temperature side melting peak heat quantity qh preferably in a range of not less than 2 J/g and not more than 20 J/g, more preferably in a range of not less than 3 J/g and not more than 15 J/g, and still more preferably in a range of not less than 4 J/g and not more than 10 J/g. The polypropylene resin-based in-mold expansion-molded product which has a high-temperature side melting peak heat quantity qh of less than 2 J/g tends to easily deteriorate in mechanical strength. Meanwhile, the polypropylene resin-based in-mold expansion-molded product which has a high-temperature side melting peak heat quantity qh of more than 20 J/g tends to deteriorate in fusibility.

[Examples]

The following description specifically discusses the present invention with reference to Examples and Comparative Examples. However, the present invention is not limited to such Examples and Comparative Examples.

The following are compounds (substances) used in the Examples and Comparative Examples.

- Polypropylene resin:
  F 227A [(sample product) manufactured by Prime Polymer Co., Ltd., being an ethylene-propylene random copolymer, and having a melting point of 141 °C, a melt index of 7 g/10 min, and an ethylene content of 3 wt%]
- Carbon black:

  Ensaco 350G (electrically conductive carbon black) [manufactured by TIMCAL Graphite & Carbon, and having a DBP absorption amount of 320 $cm^3$/100g and a BET specific surface area of 770 $m^2$/g];
  Ketjen Black EC600D (electrically conductive carbon black) [manufactured by Lion Corporation, and having a DBP absorption amount of 495 $cm^3$/100g and a BET specific surface area of 1270 $m^2$/g];
  acetylene black (electrically conductive carbon black) [a particulate product of DENKA BLACK manufactured by DENKI KAGAKU KOGYO KABUSHIKI KAISHA, and having a DBP absorption amount of 160 $cm^3$/100g and a BET specific surface area of 70 $m^2$/g)];
  coloring carbon black A [(sample product) manufactured by Dainichiseika Color & Chemicals Mfg. Co., Ltd.,

and having a DBP absorption amount of 140 cm$^3$/100g, a BET specific surface area of 370 m$^2$/g, and a structure average area of 12.9 × 10$^4$ nm$^2$]; and

coloring carbon black B [VULCAN 9A32 manufactured by Cabot Corporation, and having a DBP absorption amount of 120 cm$^3$/100g, a BET specific surface area of 20 m$^2$/g, and a structure average area of 0.8 × 10$^4$ nm$^2$]

- Cell diameter enlarging agent:

  polyethylene glycol [PEG#300 manufactured by Lion Corporation, having an average molecular weight of 300, and being in a form of a liquid at 150 °C under a normal pressure];

  glycerin [sample medicine manufactured by Wako Pure Chemical Industries, Ltd., and having a melting point of 18 °C and a boiling point of 290 °C]; and

  glycerin monostearic acid ester [sample medicine manufactured by Wako Pure Chemical Industries, Ltd., having a melting point of 60 °C, and being in a form of a liquid at 150 °C under a normal pressure]

- Flame retardant:

  tris(2,3-dibromopropyl)isocyanurate [TAIC 6B manufactured by SHIKOKU CHEMICALS CORPORATION];

  sterically-hindered amine ether [NOR116 manufactured by Ciba Japan K.K.]; and

  aromatic condensed phosphoric ester [PX200 manufactured by DAIHACHI CHEMICAL INDUSTRY CO., LTD.]

- Other additives:

  zinc borate (water-soluble inorganic matter) [Zinc Borate 2335 manufactured by Tomita Pharmaceutical Co., Ltd., and having a melting point of 980 °C]; and

  ethylene bis stearic acid amide [sample medicine manufactured by Tokyo Chemical Industry Co., Ltd., having a melting point of 144 °C, and being in a form of a liquid at 150 °C under a normal pressure]

The Examples and Comparative Examples carried out measurement of physical properties and evaluations in accordance with the following method.

[Measurement of melting point]

By use of a differential scanning calorimeter (DSC) [DSC6200, manufactured by Seiko Instruments Inc.], a melting peak temperature at a second temperature increase was measured as a melting point based on a DSC curve, which was obtained in a case where 5 mg to 6 mg of polypropylene resin serving as a substrate resin was melted by being heated from 40 °C to 220 °C at a temperature increase rate of 10 °C/min, was then crystallized by being cooled from 220 °C to 40 °C at a temperature decrease rate of 10 °C/min, and was further heated from 40 °C to 220 °C at a temperature increase rate of 10 °C/min.

[Average cell diameter of expanded polypropylene resin particles]

First, expanded polypropylene resin particles were cut substantially at their respective centers with special care so as not to break their respective cell membranes. A cut surface of each of those expanded particles was observed (an observation photograph was taken) by use of a microscope [VHX digital microscope manufactured by KEYENCE CORPORATION].

On the observation photograph taken by use of the microscope, a line segment equivalent to a length of 1000 μm was drawn in a part except a top layer part of the each of the expanded particles. The number n of cells through which the line segment passed was measured, and a cell diameter was calculated based on 1000/n (μm). A similar operation was carried out with respect to 10 expanded particles, and an average of respective calculated cell diameters of the 10 expanded particles was regarded as an average cell diameter of the expanded polypropylene resin particles.

[Average cell diameter of polypropylene resin-based in-mold expansion-molded product]

A polypropylene resin-based in-mold expansion-molded product formed to have an approximate size of 300 mm in length, 400 mm in width, and 50 mm in thickness was cut substantially at its center in its thickness direction, and a cut surface thereof was observed (an observation photograph was taken) by use of a microscope [VHX digital microscope manufactured by KEYENCE CORPORATION].

An average cell diameter of the polypropylene resin-based in-mold expansion-molded product was calculated by use of the observation photograph as in the case of the calculation of the average cell diameter of the expanded polypropylene resin particles. Note, however, that a line segment equivalent to a length of 1000 $\mu$m was drawn in a part except a top layer part of a single expanded polypropylene resin particle so as not to extend over the expanded polypropylene resin particles constituting the in-mold expansion-molded product. A similar operation was carried out at 10 points, and an average of respective calculated cell diameters of the 10 points was regarded as an average cell diameter of the polypropylene resin-based in-mold expansion-molded product.

[Expansion ratio of expanded polypropylene resin particles]

After a weight w (g) of the expanded polypropylene resin particles was measured, the expanded polypropylene resin particles were immersed in ethanol, where an increased volume (immersed volume) v (cm$^3$) of the expanded polypropylene resin particles was measured. Then, an expansion ratio was measured based on an equation below and by use of a density d (g/cm$^3$) of the polypropylene resin which had not been expanded:

$$\text{expansion ratio} = d \times v/w \text{ (times)}$$

Note that "d = 0.9 g/cm$^3$" in the present invention, though the density d of the polypropylene resin which has not been expanded strictly varies depending on an amount and a kind of an additive to be contained.

[Measurement of DSC ratio of expanded polypropylene resin particles]

By use of a differential scanning calorimeter (DSC) [DSC6200, manufactured by Seiko Instruments Inc.], a DSC ratio was calculated based on a DSC curve, which was obtained in a case where 5 mg to 6 mg of the expanded polypropylene resin particles were heated from 40 °C to 220 °C at a temperature increase rate of 10 °C/min. Specifically, as shown in Fig. 1, based on the DSC curve in which the expanded polypropylene resin particles show two melting peaks, a ratio of a high-temperature side melting peak "{Qh / (Q1 + Qh)} $\times$ 100" was calculated from a low-temperature side melting peak heat quantity Q1 and a high-temperature side melting peak heat quantity Qh. The low-temperature side melting peak heat quantity Q1 is a heat quantity defined by a low-temperature side peak of the DSC curve and a tangent from a local maximum point between the low-temperature side peak and a high-temperature side peak of the DSC curve to a melting start base line. The high-temperature side melting peak heat quantity Qh is a heat quantity defined by the high-temperature side peak of the DSC curve and a tangent from the local maximum point between the low-temperature side peak and the high-temperature side peak to a melting end base line.

[Measurement of DSC ratio of polypropylene resin-based in-mold expansion-molded product]

Samples were prepared by cutting out 5 mg to 6 mg of the polypropylene resin-based in-mold expansion-molded product. Then, a DSC ratio of the polypropylene resin-based in-mold expansion-molded product was measured as in the case of the measurement of the DSC ratio of the expanded polypropylene resin particles, and a ratio of a high-temperature side melting peak "{qh / (ql + qh)} $\times$ 100" was calculated.

[Bulk density of expanded polypropylene resin particles]

After a container having a capacity of approximately 5L was filled with the expanded polypropylene resin particles which had been quietly fed into the container, a weight of the expanded polypropylene resin particles in the container was measured, and a bulk density (g/L) was obtained by dividing the weight by the capacity of the container.

[Molded product density of polypropylene resin-based in-mold expansion-molded product]

The polypropylene resin-based in-mold expansion-molded product formed to have an approximate size of 300 mm in length, 400 mm in width, and 50 mm in thickness was cut substantially at its center in its thickness direction, so that 5 rectangular test pieces (having no skin layers) being 150 mm in length, 50 mm in width, and 12 mm in thickness were cut out for an HBF test of flame retardancy standard UL94. Then, a weight and dimensions (a length, a width, and a thickness) of each of the test pieces thus cut out were measured. Next, a volume of the each of the test pieces was calculated from a product of the dimensions (the length, the width, and the thickness), and the weight was divided by the volume thus calculated. Then, respective values for the 5 test pieces which values had been obtained by the division were averaged so as to obtain a molded product density (g/L).

[Evaluation of fusibility]

After a slit of approximately 3 mm was made with a cutter in a thickness direction of the polypropylene resin-based in-mold expansion-molded product formed to have an approximate size of 300 mm in length, 400 mm in width, and 50 mm in thickness, the polypropylene resin-based in-mold expansion-molded product was fractured with a hand at a part of the slit, and a fracture surface was observed. A ratio of the number of broken expanded polypropylene resin particles to the number of expanded polypropylene resin particles constituting the fracture surface was obtained as a fusion ratio (%). Fusibility was evaluated in accordance with the following criteria. A result of the evaluation is shown by G (Good) or P (Poor) as below.
G (Good): The fusion ratio is not less than 60%.
P (Poor): The fusion ratio is less than 60%.

[Evaluation of surface property]

A surface of the polypropylene resin-based in-mold expansion-molded product formed to have an approximate size of 300 mm in length, 400 mm in width, and 50 mm in thickness was visually observed. A surface property was evaluated in accordance with the following criteria. A result of the evaluation is shown by G (Good), E (Enough), or P (Poor) as below.
G (Good): No or few wrinkle, sink, or void is seen on the su rface.
E (Enough): At least one of a wrinkle, a sink, and a void is slightly seen on the surface.
P (Poor): At least one of a wrinkle, a sink, and a void is noticeably seen on the surface.

[Evaluation of electrical conductivity]

A volume resistivity value of the polypropylene resin-based in-mold expansion-molded product was measured by use of Loresta-GP (manufactured by Mitsubishi Chemical Anatech Co., Ltd.) in accordance with JIS K7194-1994. Electrical conductivity was evaluated in accordance with the following criteria. A result of the evaluation is shown by G (Good), E (Enough), or P (Poor) as below.
G (Good): The volume resistivity value is not more than 200 0 $\Omega$·cm.
E (Enough): The volume resistivity value is in a range of more than 2000 $\Omega$·cm and not more than 5000 $\Omega$·cm.
P (Poor): The volume resistivity value is more than 5000 $\Omega$·cm.

[Evaluation of flame retardancy]

The polypropylene resin-based in-mold expansion-molded product formed to have an approximate size of 300 mm in length, 400 mm in width, and 50 mm in thickness was cut substantially at its center in its thickness direction, so that rectangular test pieces (having no skin layers) being 150 mm in length, 50 mm in width, and 12 mm in thickness were cut out. An HBF test of flame retardancy standard UL94 was carried out by use of the obtained test pieces. Flame retardancy was evaluated in accordance with the following criteria. A result of the evaluation is shown by G (Good) or P (Poor) as below. Further, a burning rate (mm/min) is also shown in each of Tables 1 and 2.
G (Good): Standards for determination in the HBF test are satisfied (a burning rate between gages of 100 mm is not more than 40 mm/min, or a burning distance is less than 125 mm).
P (Poor): Standards for determination in the HBF test are not satisfied.
Next, the following description specifically discusses the Examples and Comparative Examples of the present invention.

(Example 1)

[Preparation of polypropylene resin particles]

A polypropylene resin composition was obtained by mixing, by use of a Banbury mixer, a blend of (i) 100 parts by weight of an ethylene-propylene random copolymer having a melting point of 141 °C, a melt index of 7 g/10 min, and an ethylene content of 3 wt% and (ii) 18 parts by weight of Ensaco 350G which is electrically conductive carbon black and which has a DBP absorption amount of 320 cm$^3$/100g and a BET specific surface area of 770 m$^2$/g. Next, the polypropylene resin composition thus obtained was put into a double-screw extruder [TEK 45mm extruder, manufactured by O.N. MACHINERY CO., LTD.] of 45 mm in diameter and melt-kneaded at a resin temperature of 220 °C. Note, however, that in the middle of the double-screw extruder during the melt-kneading, polyethylene glycol serving as a cell diameter enlarging agent was added to the polypropylene resin composition in a ratio of 0.5 part by weight with respect

EP 2 796 489 B1

to 100 parts by weight of the ethylene-propylene random copolymer. An obtained melt-kneaded resin was extruded by use of a circular die so as to have a strand shape. The melt-kneaded resin was water-cooled and then cut with a pelletizer. This made it possible to obtain polypropylene resin particles having a weight per grain of approximately 1.8 mg.

[Preparation of expanded polypropylene resin particles]

An autoclave which had a capacity of 10 L and was resistant to pressure was fed with 100 parts by weight of the obtained polypropylene resin particles, 170 parts by weight of water, 2.0 parts by weight of tribasic calcium phosphate serving as an inorganic dispersing agent, and 0.075 part by weight of sodium alkylsulfonate serving as an auxiliary dispersion agent, and under stirring, 5.0 parts by weight of carbon dioxide serving as a foaming agent was added to a resultant mixture. No talc was added to the polypropylene resin particles. Next, the contents of the autoclave were heated to an expansion temperature of 147 °C, and then an internal pressure of the autoclave was set to 3.0 MPa (a gauge pressure) by further adding carbon dioxide to the autoclave. Subsequently, after the autoclave was retained as it was at 147 °C for 30 minutes, a valve provided in a lower part of the autoclave was opened, and the contents of the autoclave were discharged under an atmospheric pressure through an aperture orifice of 4.0 mm in diameter, so that first-stage expanded particles were obtained. In this case, in order that an expansion pressure was constant, a back pressure was applied by injecting carbon dioxide from an upper part of the autoclave.
The obtained first-stage expanded particles had an average cell diameter of 0.15 mm, an expansion ratio of 13 times, and a DSC ratio of 11%. These first-stage expanded particles to which an internal pressure (expanded particle internal pressure) of 0.26 MPa (absolute pressure) had been applied by impregnating the first-stage expanded particles with air were heated by water vapor having a pressure (steam pressure) of 0.05 MPa (gauge pressure). This made it possible to obtain second-stage expanded particles having an average cell diameter of 0.17 mm, a bulk density of 30 g/L, and a DSC ratio of 12%.

[Preparation of polypropylene resin-based in-mold expansion-molded product]

Next, by use of a polyolefin expansion molding machine [KD-345, manufactured by DAISEN], a mold being 300 mm in length, 400 mm in width, and 50 mm in thickness was filled with the second-stage expanded particles (expanded polypropylene resin particles) which had been prepared so as to have an internal air pressure (expanded particle internal pressure) of 0.20 MPa (absolute pressure). The second-stage expanded particles were heat-molded at a molding heating steam pressure (steam pressure) of 0.30 MPa (gauge pressure) while being compressed by 10% in its thickness direction. This made it possible to obtain a polypropylene resin-based in-mold expansion-molded product.
The obtained polypropylene resin-based in-mold expansion-molded product was left standing at a room temperature (25 °C) for 1 hour. Thereafter, the polypropylene resin-based in-mold expansion-molded product was dried to be cured in a thermostatic chamber at 75 °C for 3 hours. After taken out of the thermostatic chamber, the polypropylene resin-based in-mold expansion-molded product was left standing again at a room temperature. Then, an average cell diameter, a molded product density, and a DSC ratio of the polypropylene resin-based in-mold expansion-molded product were measured, and fusibility, a surface property, electrical conductivity, and flame retardancy were evaluated. Table 1 shows a result of the measurement and the evaluation.

(Examples 2 through 10)

[Preparation of polypropylene resin particles]

Examples 2 through 10 each obtained polypropylene resin particles as in the case of Example 1 by using, in blended amounts shown in Table 1, an electrically conductive carbon black, a cell diameter enlarging agent, and/or a flame retardant each shown in Table 1. Note that Examples 2 through 10 each added a flame retardant while preparing a polypropylene resin composition.

[Preparation of expanded polypropylene resin particles]

Examples 2 through 10 each obtained first-stage expanded particles and second-stage expanded particles (expanded polypropylene resin particles) as in the case of Example 1 except that the expansion condition of Example 1 had been changed to that shown in Table 1. Table 1 shows a result of evaluation of obtained first-stage expanded particles and obtained second-stage expanded particles.

[Preparation of polypropylene resin-based in-mold expansion-molded product]

Examples 2 through 10 each obtained a polypropylene resin-based in-mold expansion-molded product by use of the obtained second-stage expanded particles as in the case of Example 1. Table 1 shows a result of evaluation of obtained polypropylene resin-based in-mold expansion-molded products.

(Example 11)

[Preparation of polypropylene resin particles]

Example 11 obtained polypropylene resin particles as in the case of Example 1 except that no polyethylene glycol serving as the cell diameter enlarging agent had been added.

[Preparation of expanded polypropylene resin particles]

An autoclave which had a capacity of 10 L and was resistant to pressure was fed with 100 parts by weight of the obtained polypropylene resin particles, 300 parts by weight of water, 1.56 parts by weight of tribasic calcium phosphate serving as an inorganic dispersing agent, and 0.048 part by weight of sodium alkylsulfonate serving as an auxiliary dispersion agent, and a resultant mixture to which 14 parts by weight of isobutane serving as a foaming agent had been added was stirred before being heated. Next, the contents of the autoclave were heated to an expansion temperature of 147 °C, and then an internal pressure of the autoclave was set to 2.1 MPa (a gauge pressure) by further adding butane to the autoclave. Subsequently, after the autoclave was retained as it was at 147 °C for 30 minutes, a valve provided in a lower part of the autoclave was opened, and the contents of the autoclave were discharged under an atmospheric pressure through an aperture orifice of 4.0 mm in diameter, so that first-stage expanded particles were obtained. In this case, in order that an expansion pressure was constant, a back pressure was applied by injecting nitrogen from an upper part of the autoclave.
The obtained first-stage expanded particles had an average cell diameter of 0.28 mm, an expansion ratio of 22 times, a bulk density of 26 g/L, and a DSC ratio of 11%.

[Preparation of polypropylene resin-based in-mold expansion-molded product]

Next, Example 11 carried out in-mold expansion molding with respect to the first-stage expanded particles without carrying out the second-stage expansion step. That is, Example 11 obtained a polypropylene resin-based in-mold expansion-molded product as in the case of Example 1 except that the molding condition of Example 1 had been changed to that shown in Table 1. Table 1 shows a result of evaluation of the obtained polypropylene resin-based in-mold expansion-molded product.

[Table 1]

| | | | Example | | | | | |
|---|---|---|---|---|---|---|---|---|
| | | | 1 | 2 | 3 | 4 | 5 | 6 |
| Ethylene/propylene random copolymer | | pbw | 100 | 100 | 100 | 100 | 100 | 100 |
| Carbon black (electrically conductive or coloring) | Ensaco 350G | pbw | 18 | 18 | 18 | 18 | 18 | 13 |
| | Ketjen Black EC600D | pbw | | | | | | |
| | Acetylene black | pbw | | | | | | |
| | Coloring carbon black A | pbw | | | | | | |
| | Coloring carbon black B | pbw | | | | | | |
| | Carbon black property | (DBP absorption amount) | $cm^3/100g$ | 320 | 320 | 320 | 320 | 320 | 320 |
| | | (BET specific surface area) | $m^2/g$ | 770 | 770 | 770 | 770 | 770 | 770 |
| | | (Structure average area) | $\times 10^4$ $nm^2$ | - | - | - | - | - | - |
| Cell diameter enlarging agent | Polyethylene glycol (average molecular weight: 300) | pbw | 0.5 | 0.5 | 0.5 | 0.5 | 0.5 | 0.5 |
| | Glycerin, | pbw | | | | | | |
| | Glycerin monostearic acid ester | pbw | | | | | | |
| Other additive | Zinc borate (water-soluble inorganic matter) | pbw | | | | | | |
| | Ethylene bis stearic acid amide | pbw | | | | | | |
| Flame retardant | Tris(2,3-dibromopropyl)isocyanurate | pbw | | | | | 3 | |
| | Sterically-hindered amine ether NOR116 | pbw | | | | | | |
| | Aromatic condensed phosphoric ester PX200 | pbw | | | | | | |

*pbw stands for parts by weight.

EP 2 796 489 B1

[Table 1] cont.

| | | | Example | | | | |
|---|---|---|---|---|---|---|---|
| | | | 7 | 8 | 9 | 10 | 11 |
| Ethylene/propylene random copolymer | | pbw | 100 | 100 | 100 | 100 | 100 |
| Carbon black (electrically conductive or coloring) | Ensaco 350G | pbw | 23 | | 18 | 18 | 18 |
| | Ketjen Black EC600D | pbw | | 11 | | | |
| | Acetylene black | pbw | | | | | |
| | Coloring carbon black A | pbw | | | | | |
| | Coloring carbon black B | pbw | | | | | |
| | Carbon black property (DBP absorption amount) | $cm^3/100g$ | 320 | 495 | 320 | 320 | 320 |
| | Carbon black property (BET specific surface area) | $m^2/g$ | 770 | 1270 | 770 | 770 | 770 |
| | Carbon black property (Structure average area) | $\times\,10^4\,nm^2$ | - | - | - | - | - |
| Cell diameter enlarging agent | Polyethylene glycol (average molecular weight: 300) | pbw | 0.7 | 0.5 | | | |
| | Glycerin, | pbw | | | 0.3 | | |
| | Glycerin monostearic acid ester | pbw | | | | 1 | |
| Other additive | Zinc borate (water-soluble inorganic matter) | pbw | | | | | |
| | Ethylene bis stearic acid amide | pbw | | | | | |
| Flame retardant | Tris(2,3-dibromopropyl)isocyanurate | pbw | | | | | |
| | Sterically-hindered amine ether NOR116 | pbw | | | | | |
| | Aromatic condensed phosphoric ester PX200 | pbw | | | | | |

*pbw stands for parts by weight.

EP 2 796 489 B1

[Table 1] cont.

| | | | | Example | | | | | |
|---|---|---|---|---|---|---|---|---|---|
| | | | | 1 | 2 | 3 | 4 | 5 | 6 |
| Polypropylene resin expanded particles | First-stage expansion condition | Carbon dioxide | pbw | 5.0 | 5.0 | 5.0 | 5.0 | 5.0 | 5.0 |
| | | Isobutane | pbw | - | - | - | - | - | - |
| | | Expansion temperature | ºC | 147 | 148 | 146 | 147 | 147 | 147 |
| | | Expansion pressure (gauge pressure) | MPa | 3.0 | 3.0 | 3.0 | 3.0 | 3.0 | 3.0 |
| | First-stage expanded particles | Average cell diameter | mm | 0.15 | 0.16 | 0.14 | 0.15 | 0.15 | 0.16 |
| | | Expansion ratio | times | 13 | 14 | 12 | 13 | 16 | 15 |
| | | DSC ratio | % | 11 | 9 | 13 | 11 | 13 | 11 |
| | Second-stage expansion condition | Expanded particle internal pressure (absolute pressure) | MPa | 0.26 | 0.26 | 0.26 | 0.28 | 0.22 | 0.26 |
| | | Steam pressure (gauge pressure) | MPa | 0.05 | 0.04 | 0.06 | 0.08 | 0.07 | 0.04 |
| | Second-stage expanded particles | Average cell diameter | mm | 0.17 | 0.17 | 0.17 | 0.19 | 0.17 | 0.18 |
| | | Bulk density | g/L | 30 | 30 | 30 | 26 | 29 | 30 |
| | | DSC ratio | % | 12 | 10 | 13 | 11 | 13 | 11 |
| Polypropylene resin-based in-mold expansion-molded product | Molding condition | Expanded particle internal pressure (absolute pressure) | MPa | 0.20 | 0.20 | 0.20 | 0.20 | 0.20 | 0.20 |
| | | Steam pressure (gauge pressure) | MPa | 0.30 | 0.30 | 0.30 | 0.30 | 0.30 | 0.30 |
| | In-mold expansion-molded product | Average cell diameter | mm | 0.24 | 0.24 | 0.23 | 0.27 | 0.25 | 0.25 |
| | | Molded product density | g/L | 30 | 30 | 30 | 26 | 29 | 30 |
| | | DSC ratio | % | 11 | 8 | 12 | 10 | 10 | 10 |
| | | Fusibility | - | G | G | G | G | G | G |
| | | Surface property | - | G | G | G | G | G | G |
| | | Electrical conductivity | - | G | G | G | G | G | G |
| | | Flame retardancy (burning rate) | - (mm/min) | G (35) | G (36) | G (32) | G (39) | G (27) | G (35) |

*pbw stands for parts by weight.

[Table 1] cont.

| | | | | Example | | | | |
|---|---|---|---|---|---|---|---|---|
| | | | | 7 | 8 | 9 | 10 | 11 |
| Polypropylene resin expanded particles | First-stage expansion condition | Carbon dioxide | pbw | 5.0 | 5.0 | 5.0 | 5.0 | - |
| | | Isobutane | pbw | - | - | - | - | 14 |
| | | Expansion temperature | ºC | 147 | 147 | 147 | 147 | 147 |
| | | Expansion pressure (gauge pressure) | MPa | 3.0 | 3.0 | 3.0 | 3.0 | 2.1 |
| | First-stage expanded particles | Average cell diameter | mm | 0.14 | 0.15 | 0.12 | 0.13 | 0.28 |
| | | Expansion ratio | times | 13 | 13 | 12 | 13 | 22 bulk density 26g/L |
| | | DSC ratio | % | 11 | 11 | 12 | 12 | 11 |
| | Second-stage expansion condition | Expanded particle internal pressure (absolute pressure) | MPa | 0.26 | 0.26 | 0.26 | 0.26 | - |
| | | Steam pressure (gauge pressure) | MPa | 0.07 | 0.05 | 0.07 | 0.05 | - |
| | Second-stage expanded particles | Average cell diameter | mm | 0.17 | 0.17 | 0.17 | 0.17 | - |
| | | Bulk density | g/L | 30 | 31 | 30 | 30 | - |
| | | DSC ratio | % | 11 | 11 | 12 | 12 | - |
| Polypropylene resin-based in-mold expansion-molded product | Molding condition | Expanded particle internal pressure (absolute pressure) | MPa | 0.20 | 0.20 | 0.20 | 0.20 | 0.20 |
| | | Steam pressure (gauge pressure) | MPa | 0.30 | 0.30 | 0.30 | 0.30 | 0.30 |
| | In-mold expansion-molded product | Average cell diameter | mm | 0.22 | 0.23 | 0.24 | 0.25 | 0.37 |
| | | Molded product density | g/L | 30 | 31 | 30 | 30 | 26 |
| | | DSC ratio | % | 8 | 10 | 11 | 10 | 8 |
| | | Fusibility | - | G | G | G | G | G |
| | | Surface property | - | G | G | G | G | G |
| | | Electrical conductivity | - | G | G | G | G | G |
| | | Flame retardancy (burning rate) | - (mm/min) | G (36) | G (36) | G (36) | G (37) | G (31) |

*pbw stands for parts by weight.

EP 2 796 489 B1

(Comparative Examples 1 through 12)

[Preparation of polypropylene resin particles]

Comparative Examples 1 through 12 each obtained polypropylene resin particles as in the case of Example 1 by using, in blended amounts shown in Table 2, an electrically conductive carbon black, a cell diameter enlarging agent, and/or a flame retardant each shown in Table 2. Note that Comparative Examples 1 through 12 each added a flame retardant while preparing a polypropylene resin composition.

[Preparation of expanded polypropylene resin particles]

Comparative Examples 1 through 12 each obtained first-stage expanded particles and second-stage expanded particles (expanded polypropylene resin particles) as in the case of Example 1 except that the expansion condition of Example 1 had been changed to that shown in Table 2. Table 2 shows a result of evaluation of obtained first-stage expanded particles and obtained second-stage expanded particles.

[Preparation of polypropylene resin-based in-mold expansion-molded product]

Comparative Examples 1 through 12 each obtained a polypropylene resin-based in-mold expansion-molded product by use of the obtained second-stage expanded particles as in the case of Example 1. Table 2 shows a result of evaluation of obtained polypropylene resin-based in-mold expansion-molded products.

[Table 2]

| | | | | Comparative Example | | | | | |
|---|---|---|---|---|---|---|---|---|---|
| | | | | 1 | 2 | 3 | 4 | 5 | 6 |
| Ethylene/propylene random copolymer | | | pbw | 100 | 100 | 100 | 100 | 100 | 100 |
| Carbon black (electrically conductive or coloring) | Ensaco 350G | | pbw | 18 | 10 | 28 | 10 | 28 | 18 |
| | Ketjen Black EC600D | | pbw | | | | | | |
| | Acetylene black | | pbw | | | | | | |
| | Coloring carbon black A | | pbw | | | | | | |
| | Coloring carbon black B | | pbw | | | | | | |
| | Carbon black property | (DBP absorption amount) | $cm^3$/100g | 320 | 320 | 320 | 320 | 320 | 320 |
| | | (BET specific surface area) | $m^2$/g | 770 | 770 | 770 | 770 | 770 | 770 |
| | | (Structure average area) | $\times 10^4$ $nm^2$ | - | - | - | - | - | - |
| Cell diameter enlarging agent | Polyethylene glycol (average molecular weight: 300) | | pbw | | | | 0.5 | 0.5 | |
| | Glycerin, | | pbw | | | | | | |
| | Glycerin monostearic acid ester | | pbw | | | | | | |
| Other additive | Zinc borate (water-soluble inorganic matter) | | pbw | | | | | | |
| | Ethylene bis stearic acid amide | | pbw | | | | | | |
| Flame retardant | Tris(2,3-dibromopropyl)isocyanurate | | pbw | | | | | | 3 |
| | Sterically-hindered amine ether NOR116 | | pbw | | | | | | |
| | Aromatic condensed phosphoric ester PX200 | | pbw | | | | | | |

*pbw stands for parts by weight.

EP 2 796 489 B1

[Table 2] cont.

| | | | | Comparative Example | | | | | |
|---|---|---|---|---|---|---|---|---|---|
| | | | | 7 | 8 | 9 | 10 | 11 | 12 |
| Ethylene/propylene random copolymer | | | pbw | 100 | 100 | 100 | 100 | 100 | 100 |
| Carbon black (electrically conductive or coloring) | Ensaco 350G | | pbw | 18 | | | | 18 | 18 |
| | Ketjen Black EC600D | | pbw | | | | | | |
| | Acetylene black | | pbw | | 18 | | | | |
| | Coloring carbon black A | | pbw | | | 18 | | | |
| | Coloring carbon black B | | pbw | | | | 18 | | |
| | Carbon black property | (DBP absorption amount) | $cm^3/100g$ | 320 | 160 | 140 | 120 | 320 | 320 |
| | | (BET specific surface area) | $m^2/g$ | 770 | 70 | 370 | 20 | 770 | 770 |
| | | (Structure average area) | $\times 10^4 nm^2$ | - | - | 12.9 | 0.8 | - | - |
| Cell diameter enlarging agent | Polyethylene glycol (average molecular weight: 300) | | pbw | 0.5 | 0.5 | 0.5 | | | |
| | Glycerin, | | pbw | | | | 0.15 | | |
| | Glycerin monostearic acid ester | | pbw | | | | | | |
| Other additive | Zinc borate (water-soluble inorganic matter) | | pbw | | | | | 0.1 | |
| | Ethylene bis stearic acid amide | | pbw | | | | | | 0.5 |
| Flame retardant | Tris(2,3-dibromopropyl)isocyanurate | | pbw | | | | | | |
| | Sterically-hindered amine ether NOR116 | | pbw | 2.0 | | | | | |
| | Aromatic condensed phosphoric ester PX200 | | pbw | 1.0 | | | | | |

*pbw stands for parts by weight.

EP 2 796 489 B1

[Table 2] cont.

| | | | | Comparative Example | | | | | |
|---|---|---|---|---|---|---|---|---|---|
| | | | | 1 | 2 | 3 | 4 | 5 | 6 |
| Polypropylene resin expanded particles | First-stage expansion condition | Carbon dioxide | pbw | 5.0 | 5.0 | 5.0 | 5.0 | 5.0 | 5.0 |
| | | Isobutane | pbw | - | - | - | - | - | - |
| | | Expansion temperature | ºC | 147 | 147 | 147 | 147 | 147 | 147 |
| | | Expansion pressure (gauge pressure) | MPa | 3.0 | 3.0 | 3.0 | 3.0 | 3.0 | 3.0 |
| | First-stage expanded particles | Average cell diameter | mm | 0.07 | 0.11 | 0.04 | 0.15 | 0.06 | 0.07 |
| | | Expansion ratio | times | 9 | 11 | 6 | 12 | 9 | 12 |
| | | DSC ratio | % | 12 | 12 | 13 | 12 | 12 | 12 |
| | Second-stage expansion condition | Expanded particle internal pressure (absolute pressure) | MPa | 0.26 | 0.26 | 0.29 | 0.26 | 0.28 | 0.26 |
| | | Steam pressure (gauge pressure) | MPa | 0.09 | 0.07 | 0.09 | 0.06 | 0.09 | 0.07 |
| | Second-stage expanded particles | Average cell diameter | mm | 0.10 | 0.17 | 0.08 | 0.19 | 0.09 | 0.10 |
| | | Bulk density | g/L | 30 | 30 | 31 | 29 | 31 | 30 |
| | | DSC ratio | % | 13 | 12 | 13 | 12 | 12 | 12 |
| Polypropylene resin-based in-mold expansion-molded product | Molding condition | Expanded particle internal pressure (absolute pressure) | MPa | 0.20 | 0.20 | 0.20 | 0.20 | 0.20 | 0.20 |
| | | Steam pressure (gauge pressure) | MPa | 0.30 | 0.30 | 0.30 | 0.30 | 0.30 | 0.30 |
| | In-mold expansion-molded product | Average cell diameter | mm | 0.16 | 0.24 | 0.14 | 0.26 | 0.16 | 0.16 |
| | | Molded product density | g/L | 30 | 30 | 31 | 29 | 31 | 30 |
| | | DSC ratio | % | 11 | 11 | 12 | 11 | 11 | 11 |
| | | Fusibility | - | G | G | G | G | G | G |
| | | Surface property | - | G | G | E | G | E | G |
| | | Electrical conductivity | - | G | E | G | E | G | G |
| | | Flame retardancy (burning rate) | - (mm/min) | P (46) | G (39) | P (48) | G (34) | P (47) | P (41) |

*pbw stands for parts by weight.

[Table 2] cont.

| | | | | Comparative Example | | | | | |
|---|---|---|---|---|---|---|---|---|---|
| | | | | 7 | 8 | 9 | 10 | 11 | 12 |
| Polypropylene resin expanded particles | First-stage expansion condition | Carbon dioxide | pbw | 5.0 | 5.0 | 5.0 | 5.0 | 5.0 | 5.0 |
| | | Isobutane | pbw | - | - | - | - | - | - |
| | | Expansion temperature | ºC | 147 | 147 | 147 | 147 | 147 | 147 |
| | | Expansion pressure (gauge pressure) | MPa | 3.0 | 3.0 | 3.0 | 3.0 | 3.0 | 3.0 |
| | First-stage expanded particles | Average cell diameter | mm | 0.11 | 0.14 | 0.15 | 0.09 | 0.05 | 0.06 |
| | | Expansion ratio | times | 13 | 13 | 12 | 12 | 12 | 11 |
| | | DSC ratio | % | 11 | 11 | 12 | 12 | 12 | 12 |
| | Second-stage expansion condition | Expanded particle internal pressure (absolute pressure) | MPa | 0.26 | 0.26 | 0.26 | 0.26 | 0.26 | 0.26 |
| | | Steam pressure (gauge pressure) | MPa | 0.05 | 0.05 | 0.05 | 0.05 | 0.05 | 0.05 |
| | Second-stage expanded particles | Average cell diameter | mm | 0.14 | 0.17 | 0.18 | 0.12 | 0.08 | 0.09 |
| | | Bulk density | g/L | 31 | 30 | 29 | 29 | 31 | 30 |
| | | DSC ratio | % | 12 | 12 | 12 | 12 | 12 | 12 |
| Polypropylene resin-based in-mold expansion-molded product | Molding condition | Expanded particle internal pressure (absolute pressure) | MPa | 0.20 | 0.20 | 0.20 | 0.20 | 0.20 | 0.20 |
| | | Steam pressure (gauge pressure) | MPa | 0.30 | 0.30 | 0.30 | 0.30 | 0.30 | 0.30 |
| | In-mold expansion-molded product | Average cell diameter | mm | 0.17 | 0.24 | 0.25 | 0.17 | 0.10 | 0.15 |
| | | Molded product density | g/L | 31 | 30 | 29 | 29 | 31 | 30 |
| | | DSC ratio | % | 11 | 10 | 10 | 11 | 11 | 11 |
| | | Fusibility | - | G | G | G | G | G | G |
| | | Surface property | - | G | G | G | G | G | G |
| | | Electrical conductivity | - | E | P | P | P | G | G |
| | | Flame retardancy (burning rate) | - (mm/min) | P (52) | G (37) | G (37) | P (41) | P (56) | P (45) |

*pbw stands for parts by weight.

EP 2 796 489 B1

The first-stage expanded particles of Examples 1, 9, and 10 contain polyethylene glycol, glycerin, and glycerin stearic acid ester, respectively. In contrast, the first-stage expanded particles of Comparative Example 1 contain none of these compounds. Examples 1, 9, and 10, and Comparative Example 1 are identical in employed first-stage expansion condition. As a result, the first-stage expanded particles of Examples 1, 9, and 10 are larger in average cell diameter than those of Comparative Example 1. This reveals that polyethylene glycol, glycerin, and glycerin stearic acid ester are each suitable as the cell diameter enlarging agent of the present invention.

Meanwhile, the first-stage expanded particles of Comparative Examples 11 and 12 contain zinc borate and ethylene bis stearic acid amide, respectively. In contrast, the first-stage expanded particles of Comparative Example 1 contain neither of these compounds. Comparative Examples 11 and 12, and Comparative Example 1 are identical in employed first-stage expansion condition. As a result, the first-stage expanded particles of Comparative Examples 11 and 12 are smaller in average cell diameter than those of Comparative Example 1. This reveals that zinc borate and ethylene bis stearic acid amide are each unsuitable as the cell diameter enlarging agent of the present invention.

A comparison between Examples 1 through 11 and Comparative Examples 1 through 12 reveals that the production method in accordance with the present invention makes it possible to obtain expanded polypropylene resin particles and a polypropylene resin-based in-mold expansion-molded product each of which is excellent in both electrical conductivity and flame retardancy.

A result of Comparative Examples 2 through 5 reveals that expanded polypropylene resin particles and a polypropylene resin-based in-mold expansion-molded product each of which is excellent in both electrical conductivity and flame retardancy cannot be obtained in a case where electrically conductive carbon black having a dibutyl phthalate absorption amount in a range of not less than 300 $cm^3$/100 g and not more than 600 $cm^3$/100 g is added in an amount out of a range of not less than 11 parts by weight and not more than 25 parts by weight.

A comparison between Example 1 and Comparative Example 1 reveals that the present invention allows an improvement in flame retardancy of a polypropylene resin-based in-mold expansion-molded product with no use of a flame retardant. A comparison between Example 1 and Comparative Example 6 reveals that use of a cell diameter enlarging agent further contributes to an improvement in flame retardancy than use of a flame retardant.

A comparison between Example 5 and Comparative Example 7 reveals that even a compound (substance) which is generally known as a flame retardant may inhibit flame retardancy depending on its kind and added amount. It seems that in Comparative Example 7, in which a cell diameter enlarging agent was added, addition of a flame retardant made an average cell diameter smaller, so that flame retardancy deteriorated as a whole.

Industrial Applicability

Since a polypropylene resin-based in-mold expansion-molded product in accordance with the present invention is excellent in electrical conductivity and flame retardancy, the polypropylene resin-based in-mold expansion-molded product is suitably usable for (i) a shock-absorbing material of an electronic device or a precision device, (ii) a parts tray of a robot line, (iii) a radio wave absorber which is used to, for example, take measures against radiation noise of an anechoic chamber or an electronic device, or take preventive measures against radio reflection, or (iv) the like.

**Claims**

1. Expanded polypropylene resin particles obtainable by expanding polypropylene resin particles containing a polypropylene resin composition which contains electrically conductive carbon black in an amount in a range of not less than 11 parts by weight and not more than 25 parts by weight with respect to 100 parts by weight of polypropylene resin, the electrically conductive carbon black having a dibutyl phthalate (DBP) absorption amount, measured in accordance with JIS K6217-4: 2008, in a range of not less than 300 $cm^3$/100 g and not more than 600 $cm^3$/100 g, the expanded polypropylene resin particles having an average cell diameter, measured in accordance with the description, in a range of more than 0.16 mm and not more than 0.35 mm.

2. The expanded polypropylene resin particles as set forth in claim 1, wherein the expansion is carried out by use of an inorganic foaming agent.

3. The expanded polypropylene resin particles as set forth in claim 2, wherein the inorganic foaming agent contains carbon dioxide.

4. The expanded polypropylene resin particles as set forth in any one of claims 1 through 3, wherein the polypropylene resin composition contained in the polypropylene resin particles further contains a cell diameter enlarging agent in an amount in a range of not less than 0.01 part by weight and not more than 10 parts by weight with respect to 100 parts by weight of the polypropylene resin.

5. The expanded polypropylene resin particles as set forth in claim 4, wherein the cell diameter enlarging agent is a compound which is present in a form of a liquid at 150 °C under a normal pressure and has a hydroxyl group.

6. The expanded polypropylene resin particles as set forth in claim 5, wherein the cell diameter enlarging agent is polyethylene glycol.

7. The expanded polypropylene resin particles as set forth in any one of claims 1 through 6, wherein the expanded polypropylene resin particles have an average cell diameter, measured in accordance with the description, in a range of not less than 0.17 mm and not more than 0.30 mm.

8. The expanded polypropylene resin particles as set forth in any one of claims 1 through 7, wherein the expanded polypropylene resin particles have a bulk density, measured in accordance with the description, in a range of not less than 23 g/L and not more than 33 g/L.

9. The expanded polypropylene resin particles as set forth in any one of claims 1 through 8, wherein the expanded polypropylene resin particles show two melting peaks in a DSC curve which is obtained in a case where calorimetry by a differential scanning calorimetry method is carried out with respect to the expanded polypropylene resin particles, and the expanded polypropylene resin particles have a ratio of a high-temperature side melting peak "$\{Qh / (Ql + Qh)\} \times 100$" in a range of not less than 8% and less than 16%, the ratio having been calculated from a low-temperature side melting peak heat quantity Ql and a high-temperature side melting peak heat quantity Qh.

10. A polypropylene resin-based in-mold expansion-molded product obtainable by in-mold molding of expanded polypropylene resin particles as set forth in any one of claims 1 through 9,
the polypropylene resin-based in-mold expansion-molded product having an average cell diameter, measured in accordance with the description, in a range of more than 0.18 mm and not more than 0.50 mm, and having a volume resistivity value, measured in accordance with JIS K7194-1994, in a range of not less than 10 $\Omega$·cm and not more than 5000 $\Omega$·cm.

11. The polypropylene resin-based in-mold expansion-molded product as set forth in claim 10, wherein the polypropylene resin-based in-mold expansion-molded product has passed an HBF test of flame retardancy standard UL94.

12. The polypropylene resin-based in-mold expansion-molded product as set forth in claim 10 or 11, wherein the polypropylene resin-based in-mold expansion-molded product has an average cell diameter, measured in accordance with the description, in a range of not less than 0.22 mm and not more than 0.40 mm.

13. The polypropylene resin-based in-mold expansion-molded product as set forth in any one of claims 10 through 12, wherein the polypropylene resin-based in-mold expansion-molded product has a molded product density, measured in accordance with the description, in a range of not less than 23 g/L and not more than 33 g/L.

14. The polypropylene resin-based in-mold expansion-molded product as set forth in any one of claims 10 through 13, wherein the polypropylene resin-based in-mold expansion-molded product shows two melting peaks in a DSC curve which is obtained in a case where calorimetry by a differential scanning calorimetry method is carried out with respect to the polypropylene resin-based in-mold expansion-molded product, and the polypropylene resin-based in-mold expansion-molded product has a ratio of a high-temperature side melting peak "$\{qh / (ql + qh)\} \times 100$" in a range of not less than 6% and less than 16%, the ratio having been calculated from a low-temperature side melting peak heat quantity ql and a high-temperature side melting peak heat quantity qh.

15. An expanded polypropylene resin particle production method comprising a first-stage expansion step of dispersing, under a stirring condition, polypropylene resin particles, water, and a foaming agent which are contained in a pressure-resistant container, heating a resultant dispersion liquid to a temperature at or higher than a softening point temperature of the polypropylene resin particles, and thereafter expanding the polypropylene resin particles by discharging the dispersion liquid in the pressure-resistant container into a pressure region having a pressure which is lower than an internal pressure of the pressure-resistant container,
the expanded polypropylene resin particles being expanded polypropylene resin particles as set forth in any one of claims 1 through 9.

**Patentansprüche**

1. Expandierte Polypropylenharzteilchen, erhältlich durch Expandieren von Polypropylenharzteilchen, die eine Polypropylenharzzusammensetzung enthalten, die elektrisch leitfähigen Ruß in einer Menge in einem Bereich von nicht weniger als 11 Gewichtsteilen und nicht mehr als 25 Gewichtsteilen, bezogen auf 100 Gewichtsteile Polypropylenharz, enthält, wobei der elektrisch leitfähige Ruß eine Dibutylphthalat (DBP)-Absorptionsmenge, gemessen gemäß JIS K6217-4: 2008, in einem Bereich von nicht weniger als 300 $cm^3$/100 g und nicht mehr als 600 $cm^3$/100 g aufweist, wobei die expandierten Polypropylenharzteilchen einen durchschnittlichen Zelldurchmesser, gemessen gemäß der Beschreibung, in einem Bereich von mehr als 0,16 mm und nicht mehr als 0,35 mm aufweisen.

2. Expandierte Polypropylenharzteilchen nach Anspruch 1, wobei die Expansion unter Verwendung eines anorganischen Treibmittels durchgeführt ist.

3. Expandierte Polypropylenharzteilchen nach Anspruch 2, wobei das anorganische Treibmittel Kohlendioxid enthält.

4. Expandierte Polypropylenharzteilchen nach einem der Ansprüche 1 bis 3, wobei die in den Polypropylenharzteilchen enthaltene Polypropylenharzzusammensetzung ferner ein Zelldurchmesser-Vergrößerungsmittel in einer Menge in einem Bereich von nicht weniger als 0,01 Gewichtsteilen und nicht mehr als 10 Gewichtsteilen, bezogen auf 100 Gewichtsteile des Polypropylenharzes, enthält.

5. Expandierte Polypropylenharzteilchen nach Anspruch 4, wobei das Zelldurchmesser-Vergrößerungsmittel eine Verbindung ist, die in Form einer Flüssigkeit bei 150°C unter Normaldruck vorliegt und eine Hydroxylgruppe aufweist.

6. Expandierte Polypropylenharzteilchen nach Anspruch 5, wobei das Zelldurchmesser-Vergrößerungsmittel Polyethylenglykol ist.

7. Expandierte Polypropylenharzteilchen nach einem der Ansprüche 1 bis 6, wobei die expandierten Polypropylenharzteilchen einen durchschnittlichen Zelldurchmesser, gemessen gemäß der Beschreibung, in einem Bereich von nicht weniger als 0,17 mm und nicht mehr als 0,30 mm aufweisen.

8. Expandierte Polypropylenharzteilchen nach einem der Ansprüche 1 bis 7, wobei die expandierten Polypropylenharzteilchen eine Schüttdichte, gemessen gemäß der Beschreibung, in einem Bereich von nicht weniger als 23 g/L und nicht mehr als 33 g/L aufweisen.

9. Expandierte Polypropylenharzteilchen nach einem der Ansprüche 1 bis 8, wobei die expandierten Polypropylenharzteilchen zwei Schmelzpeaks in einer DSC-Kurve zeigen, die in einem Fall erhalten wird, bei dem eine Kalorimetrie durch ein Differentialabtastkalorimetrieverfahren in Bezug auf die expandierten Polypropylenharzteilchen durchgeführt wird, und die expandierten Polypropylenharzteilchen einen Anteil eines hochtemperaturseitigen Schmelzpeaks "{Qh / (Ql + Qh)} $\times$ 100" in einem Bereich von nicht weniger als 8% und weniger als 16% aufweisen, wobei der Anteil aus einer niedertemperaturseitigen Schmelzpeakwärmemenge Ql und einer hochtemperaturseitigen Schmelzpeakwärmemenge Qh berechnet wurde.

10. Polypropylenharz-basiertes, in der Form expansionsgeformtes Produkt, das durch in-der-Form-Formen von expandierten Polypropylenharzteilchen nach einem der Ansprüche 1 bis 9 erhältlich ist, wobei Polypropylenharz-basierte, in der Form expansionsgeformtes Produkt einen durchschnittlichen Zelldurchmesser, gemessen gemäß der Beschreibung, in einem Bereich von mehr als 0,18 mm und nicht mehr als 0,50 mm aufweist und einen spezifischen Volumenwiderstandswert, gemessen gemäß JIS K7194-1994, in einem Bereich von nicht weniger als 10 $\Omega\cdot$cm und nicht mehr als 5000 $\Omega\cdot$cm aufweist.

11. Polypropylenharz-basiertes, in der Form expansionsgeformtes Produkt nach Anspruch 10, wobei das Polypropylenharz-basierte, in der Form expansionsgeformte Produkt einen HBF-Test der Flammschutznorm UL94 bestanden hat.

12. Polypropylenharz-basiertes, in der Form expansionsgeformtes Produkt nach Anspruch 10 oder 11, wobei das Polypropylenharz-basierte, in der Form expansionsgeformte Produkt einen durchschnittlichen Zelldurchmesser, gemessen gemäß der Beschreibung, in einem Bereich von nicht weniger als 0,22 mm und nicht mehr als 0,40 mm aufweist.

**13.** Polypropylenharz-basiertes, in der Form expansionsgeformtes Produkt nach einem der Ansprüche 10 bis 12, wobei das expansionsgeformte Produkt auf Polypropylenharzbasis eine Dichte des geformten Produkts, gemessen gemäß der Beschreibung, in einem Bereich von nicht weniger als 23 g/L und nicht mehr als 33 g/L aufweist.

**14.** Polypropylenharz-basiertes, in der Form expansionsgeformtes Produkt nach einem der Ansprüche 10 bis 13, wobei das Polypropylenharz-basierte, in der Form expansionsgeformte Produkt zwei Schmelzpeaks in einer DSC-Kurve zeigt, die in einem Fall erhalten wird, bei dem eine Kalorimetrie durch ein Differentialabtastkalorimetrieverfahren in Bezug auf das Polypropylenharz-basierte, in der Form expansionsgeformte Produkt durchgeführt wird, und das Polypropylenharz-basierte, in der Form expansionsgeformte Produkt einen Anteil eines hochtemperaturseitigen Schmelzpeaks "{qh / (ql + qh)} × 100" in einem Bereich von nicht weniger als 6% und weniger als 16% aufweist, wobei der Anteil aus einer niedertemperaturseitigen Schmelzpeakwärmemenge ql und einer hochtemperaturseitigen Schmelzpeakwärmemenge qh berechnet wurde.

**15.** Verfahren zur Herstellung expandierter Polypropylenharzteilchen, umfassend einen ersten Expansionsschritt, bei dem unter Rühren Polypropylenharzteilchen, Wasser und ein Treibmittel, die in einem druckbeständigen Behälter enthalten sind, dispergiert werden, eine resultierende Dispersionsflüssigkeit auf eine Temperatur bei oder über der Erweichungspunkttemperatur der Polypropylenharzteilchen erhitzt wird und danach die Polypropylenharzteilchen expandiert werden, indem die Dispersionsflüssigkeit in dem druckbeständigen Behälter in einen Druckbereich mit einem Druck, der niedriger als der Innendruck des druckbeständigen Behälters ist, ausgetragen wird, wobei die expandierten Polypropylenharzteilchen expandierte Polypropylenharzteilchen nach einem der Ansprüche 1 bis 9 sind.

## Revendications

**1.** Particules en résine de polypropylène expansées pouvant être obtenues par expansion de particules en résine de polypropylène contenant une composition de résine de polypropylène qui contient un noir de carbone électriquement conducteur en une quantité située dans la plage allant d'au moins 11 parties en poids à au plus 25 parties en poids pour 100 parties en poids de résine de polypropylène, le noir de carbone électriquement conducteur ayant une quantité d'absorption de phtalate de dibutyle (DBP), mesurée conformément à la norme JIS K6217-4:2008, située dans la plage allant d'au moins 300 cm$^3$/100 g à au plus 600 cm$^3$/100 g, les particules en résine de polypropylène expansées ayant un diamètre d'alvéole moyen, mesuré conformément à la description, situé dans la plage allant de plus de 0,16 mm à au plus 0,35 mm.

**2.** Particules en résine de polypropylène expansées selon la revendication 1, dans lesquelles l'expansion est effectuée par utilisation d'un agent moussant inorganique.

**3.** Particules en résine de polypropylène expansées selon la revendication 2, dans lesquelles l'agent moussant inorganique contient du dioxyde de carbone.

**4.** Particules en résine de polypropylène expansées selon l'une quelconque des revendications 1 à 3, dans lesquelles la composition de résine de polypropylène contenue dans les particules en résine de polypropylène contient en outre un agent augmentant le diamètre d'alvéole en une quantité située dans la plage allant d'au moins 0,01 partie en poids à au plus 10 parties en poids pour 100 parties en poids de la résine de polypropylène.

**5.** Particules en résine de polypropylène expansées selon la revendication 4, dans lesquelles l'agent augmentant le diamètre d'alvéole est un composé qui est présent sous la forme d'un liquide à 150 °C sous une pression normale et qui a un groupe hydroxyle.

**6.** Particules en résine de polypropylène expansées selon la revendication 5, dans lesquelles l'agent augmentant le diamètre d'alvéole est le polyéthylèneglycol.

**7.** Particules en résine de polypropylène expansées selon l'une quelconque des revendications 1 à 6, dans lesquelles les particules en résine de polypropylène expansées ont un diamètre d'alvéole moyen, mesuré conformément à la description, situé dans la plage allant d'au moins 0,17 mm à au plus 0,30 mm.

**8.** Particules en résine de polypropylène expansées selon l'une quelconque des revendications 1 à 7, dans lesquelles les particules en résine de polypropylène expansées ont une masse volumique apparente, mesurée conformément à la description, située dans la plage allant d'au moins 23 g/l à au plus 33 g/l.

9. Particules en résine de polypropylène expansées selon l'une quelconque des revendications 1 à 8, dans lesquelles les particules en résine de polypropylène expansées présentent deux pics de fusion dans une courbe DSC qui est obtenue dans le cas où une calorimétrie par un procédé de calorimétrie à balayage différentiel est effectuée en regard des particules en résine de polypropylène expansées, et lesquelles particules en résine de polypropylène expansées ont une proportion du pic de fusion du côté des températures élevées "{Qh/(Ql + Qh)} × 100" située dans la plage allant d'au moins 8 % à moins de 16 %, le rapport étant calculé à partir de la quantité de chaleur du pic de fusion du côté des basses températures Ql et de la quantité de chaleur du pic de fusion du côté des températures élevées Qh.

10. Produit moulé par expansion dans le moule à base de résine de polypropylène pouvant être obtenu par moulage dans le moule de particules de résine de polypropylène expansées de l'une quelconque des revendications 1 à 9, le produit moulé par expansion dans le moule à base de résine de polypropylène ayant un diamètre d'alvéole moyen, mesuré conformément à la description, situé dans la plage allant de plus de 0,18 mm à au plus 0,50 mm, et ayant une valeur de résistivité volumique, mesurée conformément à la norme JIS K7194-1994, située dans la plage allant d'au moins 10 Ω•cm à au plus 5000 Ω•cm.

11. Produit moulé par expansion dans le moule à base de résine de polypropylène selon la revendication 10, dans lequel le produit moulé par expansion dans le moule à base de résine de polypropylène a réussi un test HBF de norme d'ininflammabilité UL94.

12. Produit moulé par expansion dans le moule à base de résine de polypropylène selon la revendication 10 ou 11, dans lequel le produit moulé par expansion dans le moule à base de résine de polypropylène a un diamètre d'alvéole moyen, mesuré conformément à la description, situé dans la plage allant d'au moins 0,22 mm à au plus 0,40 mm.

13. Produit moulé par expansion dans le moule à base de résine de polypropylène selon l'une quelconque des revendications 10 à 12, dans lequel le produit moulé par expansion dans le moule à base de résine de polypropylène a une masse volumique de produit moulé, mesurée conformément à la description, située dans la plage allant d'au moins 23 g/l à au plus 33 g/l.

14. Produit moulé par expansion dans le moule à base de résine de polypropylène selon l'une quelconque des revendications 10 à 13, dans lequel le produit moulé par expansion dans le moule à base de résine de polypropylène présente deux pics de fusion dans une courbe DSC qui est obtenue dans le cas où une calorimétrie par un procédé de calorimétrie à balayage différentiel est effectuée en regard du produit moulé par expansion dans le moule à base de résine de polypropylène, et le produit moulé par expansion dans le moule à base de résine de polypropylène a une proportion du pic de fusion du côté des températures élevées "{qh/(ql + qh)} × 100" située dans la plage allant d'au moins 6 % à moins de 16 %, le rapport étant calculé à partir de la quantité de chaleur du pic de fusion du côté des basses températures ql et de la quantité de chaleur du pic de fusion du côté des températures élevées qh.

15. Procédé de production de particules de résine de polypropylène expansées, comprenant une première étape d'expansion consistant à disperser, dans des conditions d'agitation, des particules en résine de polypropylène, de l'eau, et un agent moussant, qui sont contenus dans un récipient résistant à la pression, à chauffer le liquide en dispersion résultant à une température égale ou supérieure au point de ramollissement des particules en résine de polypropylène, et ensuite à faire mousser les particules en résine de polypropylène par décharge du liquide en dispersion dans le récipient résistant à la pression dans une région de pression ayant une pression qui est inférieure à la pression interne du récipient résistant à la pression,
les particules en résine de polypropylène expansées étant des particules en résine de polypropylène expansées de l'une quelconque des revendications 1 à 9.

FIG. 1

EP 2 796 489 B1

FIG. 2

**EP 2 796 489 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10251436 A
- JP 2004175819 A
- EP 1055700 A1
- JP 7300536 A
- JP 9202837 A
- JP 2000169619 A

- JP 2003229691 A
- JP 2004319603 A
- JP 2004263033 A
- JP 2010209145 A
- JP 2010270243 A
- JP 8059876 A